(19) **Europäisches Patentamt / European Patent Office / Office européen des brevets**

(11) **EP 4 495 723 A1**

(12) **EUROPEAN PATENT APPLICATION**
published in accordance with Art. 153(4) EPC

(43) Date of publication:
22.01.2025 Bulletin 2025/04

(21) Application number: 23770595.9

(22) Date of filing: 08.03.2023

(51) International Patent Classification (IPC):
$G05D\ 1/00^{(2024.01)}$  $B63B\ 49/00^{(2006.01)}$
$B63B\ 79/40^{(2020.01)}$  $B63H\ 25/04^{(2006.01)}$
$G01S\ 17/93^{(2020.01)}$  $G05D\ 1/08^{(2006.01)}$

(52) Cooperative Patent Classification (CPC):
B63B 49/00; B63B 79/40; B63H 25/04;
G01S 17/93; G05D 1/00; G05D 1/08

(86) International application number:
PCT/JP2023/008840

(87) International publication number:
WO 2023/176639 (21.09.2023 Gazette 2023/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.03.2022 JP 2022040126

(71) Applicants:
• Pioneer Corporation
Tokyo 113-0021 (JP)
• Pioneer Smart Sensing Innovations Corporation
Tokyo 113-0021 (JP)

(72) Inventors:
• KATO, Masahiro
Kawagoe-shi, Saitama 350-8555 (JP)
• MATSUZAKI, Shin
Kawagoe-shi, Saitama 350-8555 (JP)
• KATO, Masahiro
Kawagoe-shi, Saitama 350-8555 (JP)

(74) Representative: Viering, Jentschura & Partner
mbB
Patent- und Rechtsanwälte
Am Brauhaus 8
01099 Dresden (DE)

(54) **INFORMATION PROCESSING APPARATUS, CONTROL METHOD, PROGRAM, AND STORAGE MEDIUM**

(57) The information processing device includes an acquisition means, a cluster generation means and a straight line generation means. The acquisition means acquires measurement data which is a set of data representing a plurality of measured points of a berthing place measured by a measurement device provided on a ship. The cluster generation means generates one or more clusters obtained by dividing the plurality of measured points by clustering. The straight line generation means configured to generate a straight line along the berthing place of the ship, based on the one or more clusters.

FIG. 3

EP 4 495 723 A1

# Description

TECHNICAL FIELD

The present disclosure relates to processing when a ship is berthed.

BACKGROUND ART

Conventionally, there is known a technology which supports berthing of a ship. For example, Patent Document 1 discloses a technique for controlling to change the attitude of the ship so that the light irradiated from the lidar and then reflected by the object around the berthing position can be received by the lidar, in the automatic berthing device for performing automatic berthing of a ship.

RELATED ART DOCUMENT

PATENT DOCUMENT

Patent Document 1: Japanese Patent Application Laid-Open under No. 2020-59403

SUMMARY OF THE INVENTION

PROBLEM TO BE SOLVED BY THE INVENTION

For ships, it is important to berth safely and smoothly to the berthing place, and it is particularly desired to realize the berthing support system for ship steering support and automatic operation. Therefore, in the berthing support system, it is necessary to calculate the parameters such as distance, speed and angle with respect to the berthing place with high accuracy. For the calculation of these parameters, it is required to accurately generate a straight line along the side surface of the berthing place.

The present invention has been made in order to solve the problems as described above, and a main object thereof is to provide an information processing device capable of suitably generating a straight line along the side surface of the berthing place.

MEANS FOR SOLVING THE PROBLEM

An invention described in claim is an information processing device comprising: an acquisition means configured to acquire measurement data which is a set of data representing a plurality of measured points of a berthing place measured by a measurement device provided on a ship; a cluster generation means configured to generate one or more clusters obtained by dividing the plurality of measured points by clustering; and a straight line generation means configured to generate a straight line along the berthing place of the ship, based on the one or more clusters.

An invention described in claim is a control method executed by a computer, comprising: acquiring measurement data which is a set of data representing a plurality of measured points of a berthing place measured by a measurement device provided on a ship; generating one or more clusters obtained by dividing the plurality of measured points by clustering; and generating a straight line along the berthing place of the ship, based on the one or more clusters.

An invention described in claim is a program causing a computer to execute processing of: acquiring measurement data which is a set of data representing a plurality of measured points of a berthing place measured by a measurement device provided on a ship; generating one or more clusters obtained by dividing the plurality of measured points by clustering; and generating a straight line along the berthing place of the ship, based on the one or more clusters.

BRIEF DESCRIPTION OF THE DRAWINGS

[FIG. 1A] FIG. 1A is a block diagram of an operation support system.

[FIG. 1B] FIG. 1B is a top view showing a a ship and field of view ranges lidars included in the operation support system.

[FIG. 1C] FIG. 1C is a view showing a ship and field of view ranges of the lidars from the rear.

[FIG. 2] FIG. 2 is a block diagram showing an example of a hardware configuration of an information processing device.

[FIG. 3] FIG. 3 is a functional block diagram related to berthing support processing.

[FIG. 4A] FIG. 4A shows a view in which the lidar is capturing a quay to be berthed.

[FIG. 4B] FIG. 4B is a perspective view of the quay showing measured points and a nearest neighbor point for each vertical line on the quay, which is the berthing place measured by the lidar.

[FIG. 5A] FIG. 5A shows an example of a data structure of reliability information.

[FIG. 5B] FIG. 5B is a diagram showing an example of the indexes and reliability included in the reliability information.

[FIG. 5C] FIG. 5C is a bird's-eye view showing a target ship and the berthing place, with the indexes shown in FIG. 5B.

[FIG. 6A] FIG. 6A is a diagram showing an example of a ship coordinate system based on a hull of the target ship.

[FIG. 6B] FIG. 6B is a perspective view of a structure showing normal vectors.

[FIG. 7A] FIG. 7A is a diagram showing a situation where a ship is approaching the quay on which pie-type fenders are installed on its side surface.

[FIG. 7B] FIG. 7B is a perspective view showing the nearest neighbor points corresponding to the berthing place shown in FIG. 7A.

[FIG. 7C] FIG. 7C shows a diagram of a straight line Lx generated according to the nearest neighbor points shown in FIG. 7B.

[FIG. 7D] FIG. 7D shows a diagram of a straight line Lx generated according to the nearest neighbor points shown in FIG. 7B.

[FIG. 7E] FIG. 7E is a diagram showing an example when a quay distance is calculated according to the straight line Lx shown in FIG. 7D.

[FIG. 8A] FIG. 8A shows examples of a center of gravity position GP, a reference position RP, and a distance Dg.

[FIG. 8B] FIG. 8B is a diagram for explaining parameters relating to calculation of a grouping threshold.

[FIG. 8C] FIG. 8C shows an example of a process of clustering.

[FIG. 8D] FIG. 8D shows an example of a process of clustering.

[FIG. 9] FIG. 9 is a diagram showing an example in which clustering is performed for a plurality of measured points included in berthing place edge point cloud shown in FIG. 8A.

[FIG. 10] FIG. 10 is a diagram showing an example of distances Dg1 and Dg2 calculated when clustering is performed as shown in FIG. 9.

[FIG. 11A] FIG. 11 is a diagram showing a straight line Lc1 generated as the berthing side straight line Ls by a first generation method.

[FIG. 11B] FIG. 11B is a diagram showing the berthing side straight line Ls generated in a case where pie-type fenders are installed on the side surface of the quay.

[FIG. 12A] FIG. 12A shows an example of a process of clustering.

[FIG. 12B] FIG. 12B shows an example of a process of clustering.

[FIG. 12C] FIG. 12C is a diagram showing an example of the straight line calculated when clustering is performed as shown in FIG. 12B.

[FIG. 12D] FIG. 12D is a diagram for explaining variance for a straight line Lck.

[FIG. 12E] FIG. 12E shows an example of the berthing side straight line Ls used in place of the straight line Lck.

[FIG. 13] FIG. 13 shows an example of approximate straight lines approximately representing an edge portion of the berthing place.

[FIG. 14] FIG. 14 is a diagram illustrating an example in which clustering is performed using approximate straight lines for a plurality of measured points included in the berthing place edge point cloud shown in FIG. 13.

[FIG. 15] FIG. 15 is a diagram illustrating distances Dh1 and Dh2 calculated when clustering is performed as shown in FIG. 14.

[FIG. 16] FIG. 16 shows an example of a straight line Ld1 generated as the berthing place straight line Ls by the second generation method.

[FIG. 17A] FIG. 17A is a diagram showing an example of approximate straight lines generated when the measured points are acquired from a lateral portion of a fender.

[FIG. 17B] FIG. 17B is a diagram showing an example of performing clustering using the approximate straight lines shown in FIG. 17A.

[FIG. 17C] FIG. 17C is a diagram showing the distance from the reference position to the center of gravity position in each of the clusters shown in FIG. 17B.

[FIG. 17D] FIG. 17D is a diagram showing an example of the berthing side straight line Ls generated in accordance with FIGS. 17B and 17C.

[FIG. 17E] FIG. 17E is a diagram showing an example in which the berthing side straight line corresponding to each of a plurality of directions of the quay is generated.

[FIG. 18A] FIG. 18A is a flowchart showing an outline of berthing support processing.

[FIG. 18B] FIG. 18B is a flowchart showing an example of a process according to the first generation method of the berthing side straight line.

[FIG. 18C] FIG, 18C is a flowchart showing an example of a process according to the second generation method of the berthing side straight line.

MODES FOR EXERCISING THE INVENTION

According to one aspect of the present invention, there is provided an information processing device comprising: an acquisition means configured to acquire measurement data which is a set of data representing a plurality of measured points of a berthing place measured by a measurement device provided on a ship; a cluster generation means configured to generate one or more clusters obtained by dividing the plurality of measured points by clustering; and a straight line generation means configured to generate a straight line along the berthing place of the ship, based on the one or more clusters.

The above information processing device includes an acquisition means, a cluster generation means and a straight line generation means. The acquisition means acquires measurement data which is a set of data representing a plurality of measured points of a berthing place measured by a measurement device provided on a ship. The cluster generation means generates one or more clusters obtained by dividing the plurality of measured points by clustering. The straight line generation means configured to generate a straight line along the berthing place of the ship, based on the one or more clusters. Thus, the straight line along the side surface of the berthing place can be appropriately generated.

According to one mode of the above information processing device, the one cluster is a cluster having a shortest distance to the ship.

According to another mode of the above information processing device, the cluster generation means performs the clustering based on a resolution of the measurement device, and a mean distance between a reference position of the ship and the plurality of measured points.

According to still another mode of the above information processing device, the cluster generation means performs the clustering based on a distance between one or more approximate straight lines approximately representing edge portions of the berthing place and the plurality of measured points.

According to still another mode of the above information processing device, the straight line generation means calculates a center of gravity position for each of the plurality of clusters, and generates the straight line based on one cluster having a smallest distance between the center of gravity position and a reference position of the ship.

According to still another mode of the above information processing device, when a difference in direction vectors of the plurality of approximate straight lines is large and a number of data belonging to the plurality of clusters is equal to or larger than a predetermined value, the straight line generation means estimates that there are a plurality of quay surfaces at the berthing place and generates the straight lines in a plurality of directions corresponding to each of the plurality of quay surfaces.

According to still another mode of the above information processing device, the acquisition means acquires at least one of a first measurement data and a second measurement data. The first measurement data is generated by removing water surface reflection data, generated by reflection of light emitted by the measurement device by a water surface, from the data generated by the measurement device. The second measurement data is generated by down-sampling the data generated by the measurement device to reduce a number of data.

According to another aspect of the present invention, there is provided a control method executed by a computer, comprising: acquiring measurement data which is a set of data representing a plurality of measured points of a berthing place measured by a measurement device provided on a ship; generating one or more clusters obtained by dividing the plurality of measured points by clustering; and generating a straight line along the berthing place of the ship, based on the one or more clusters.

According to still another aspect of the present invention, there is provided a program causing a computer to execute processing of: acquiring measurement data which is a set of data representing a plurality of measured points of a berthing place measured by a measurement device provided on a ship; generating one or more clusters obtained by dividing the plurality of measured points by clustering; and generating a straight line along the berthing place of the ship, based on the one or more clusters. By executing the program on a computer, the above-described information processing device can be realized. The program can be stored and handled on a storage medium.

EMBODIMENT

A preferred embodiment of the present invention will be described below with reference to the attached drawings.

[Outline of operation support system]

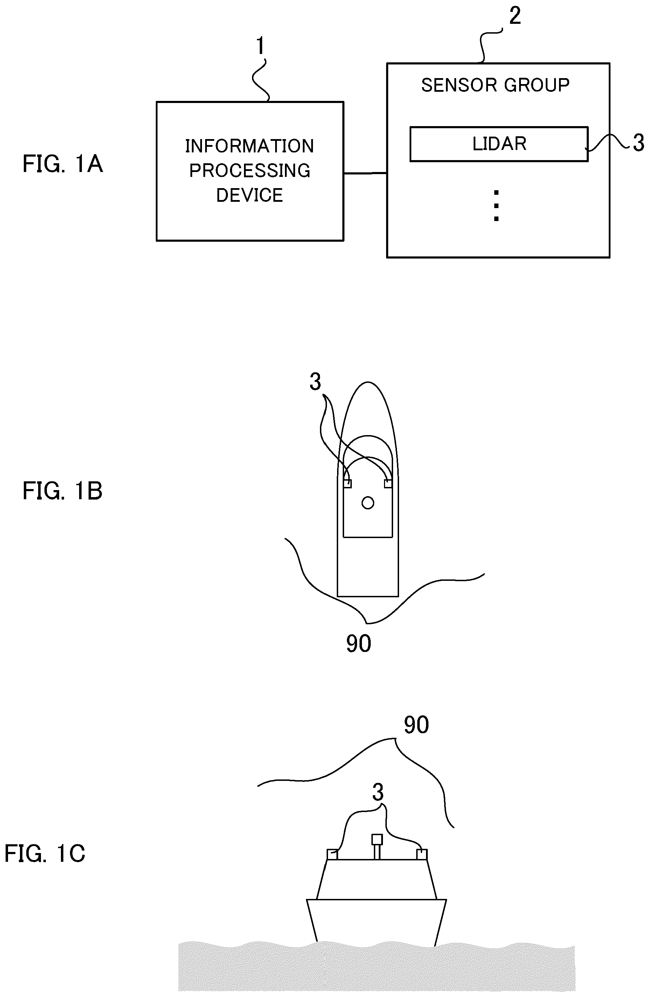

FIGS. 1A to 1C show a schematic configuration of an operation support system according to the present embodiment. Specifically, FIG. 1A shows a block configuration diagram of the operation support system, FIG. 1B is a top view illustrating a ship and field of view ranges (also referred to as a "measurement range" or "distance measurable range") 90 of the lidars 3 included in the operation support system described later, and FIG. 1C is a view illustrating the ship and the field of view ranges 90 of the lidars 3 from the rear. The operation support system includes an information processing device 1 which moves together with a ship that is a mobile body, and a sensor group 2 mounted on the ship. Hereafter, the ship equipped with the operation support system is also called a "target ship".

The information processing device 1 is electrically connected to the sensor group 2, and supports the operation of the target ship based on the outputs of various sensors included in the sensor group 2. The operation support includes berthing support such as automatic berthing. Here, "berthing" includes not only the case of docking the target ship to the quay but also the case of docking the target ship to a structural body such as a pier. In the following, the term "berthing place" shall mean a generic term for structures such as a quay, a pier, or the like that are subject to berthing. The information processing device 1 may be a navigation device provided on a ship or an electronic control device built in a ship.

The sensor group 2 includes various external and internal sensors provided on the ship. In the present embodiment, the sensor group 2 includes, for example, a lidar (Lidar: Light Detection and Ranging, or Laser Illuminated Detection And Ranging) 3.

The lidar 3 is an external sensor, which discretely measures the distance to the object existing in the outside by emitting a pulse laser for a predetermined angle range in the horizontal direction (see FIG. 1B) and a predetermined angle range in the vertical direction (see FIG. 1C) and generates a three-dimensional point cloud data indicating the position of the object. In the example of FIGS. 1B and 1C, the lidars 3 directed toward the port side and the starboard side of the ship are respectively provided on the ship. The arrangement of the lidars 3 is not limited to the example of FIGS. 1B and 1C. For example, the target ship may have a plurality of lidars 3 (e.g., lidars provided at the front and rear of the target ship) for measuring the same side directions so that a plurality of measurement data of the berthing place can be obtained at the same time at the time of berthing. Further, the number of lidars 3 installed in the target ship is not limited to two, but may be one, three or more.

The lidar 3 has an irradiation unit for irradiating a laser beam while changing the irradiation direction, a light receiving unit for receiving the reflected light of the irradiated laser beam (scattered light), and an output unit for outputting a scan data based on the light receiving signal output by the light receiving unit. The data measured for each irradiation direction of the laser beam (scanning position) is generated based on the irradiation direction corresponding to the laser beam received by the light receiving unit and the response delay time of the laser beam identified based on the received light signal described above. Hereafter, the point measured by irradiating the laser beam within the measurement range of the lidar 3 or the measurement data thereof is referred to as a "measured point".

Here, the point cloud data can be regarded as an image (frame) representing each measurement direction by a pixel and representing the measurement distance and the reflection intensity value in each measurement direction by pixel values. In this case, the emission direction of the laser beam (i.e. the measurement direction) in the elevation angle is different in the vertical direction of the pixels, and the emission direction of the laser beam in the horizontal angle is different in the horizontal direction of the pixels. Hereafter, the measured points corresponding to the alignment of pixels (i.e., vertical alignment) for which the position of the index in the horizontal direction coincide when the point cloud data is regarded as an image is referred to as a "vertical line". In addition, the index in the horizontal direction when the point cloud data is regarded as an image is called a "horizontal number", and the index in the vertical direction is called a "vertical number".

Incidentally, the lidar 3 is not limited to the above-described scan type lidar. The lidar 3 may be a flash type lidar for generating three-dimensional data by diffusing and irradiating a laser beam to the field of view of the two-dimensional array-shaped sensor. The lidar 3 is an example of a "measurement device" in the present invention.

[Configuration of the information processing device]

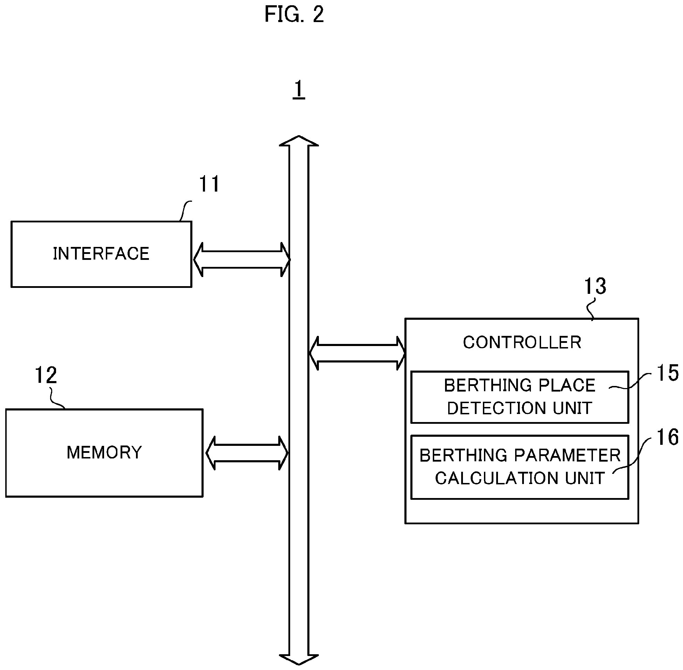

FIG. 2 is a block diagram illustrating an example of a hardware configuration of an information processing device. The information processing device 1 mainly includes an interface 11, a memory 12, and a controller 13. Each of these elements is connected to each other through a bus line.

The interface 11 performs the interface operation related to the transfer of data between the information processing device 1 and the external devices. In the present embodiment, the interface 11 acquires output data from the sensors of the sensor group 2 and supplies them to the controller 13. Further, for example, the interface 11 supplies signals for the control of the target ship generated by the controller 13 to each component of the target ship to control the operation of the target ship. For example, the target ship includes a driving source such as an engine or an electric motor, a screw for generating a propulsive force in the traveling direction based on the driving force of the driving source, a thruster for generating a lateral propulsive force based on the driving force of the driving source, and a rudder or the like which is a mechanism for freely determining the traveling direction of the ship. Then, during automatic operation such as automatic berthing, the interface 11 supplies the control signals generated by the controller 13 to these components. In the case where an electronic control device is provided in the target ship, the interface 11 supplies the control signal generated by the controller 13 to the electronic control device. The interface 11 may be a wireless interface such as a network adapter for performing wireless communication, or a hardware interface for connecting to an external device by a cable or the like. Also, the interface 11 may perform interface operation with various peripheral devices such as an input device, a display device, a sound output device, and the like.

The memory 12 may be constituted by various volatile and non-volatile memories such as a RAM (Random Access Memory), a ROM (Read Only Memory), a hard disk drive, a flash memory, and the like. The memory 12 stores programs for the controller 13 to perform predetermined processes. The programs executed by the controller 13 may be stored in a storage medium other than the memory 12.

In addition, the memory 12 stores information necessary for the processing performed by the information processing device 1 in the present embodiment. For example, the memory 12 may store map data including information about the positions of the berthing places. In another example, the memory 12 stores information about the size of the down-sampling when down-sampling is performed on the point cloud data obtained when the lidar 3 performs scanning for one period.

The controller 13 includes one or more processors such as a CPU (Central Processing Unit), a GPU (Graphics Processing Unit), and a TPU (Tensor Processing Unit), and controls the entire information processing device 1. In this case, the controller 13 performs processing for the operation support or the like of the target ship by executing the programs stored in the memory 12 or the like.

The controller 13 functionally includes a berthing place detection unit 15 and a berthing parameter calculation unit 16. The berthing place detection unit 15 performs processing for the detection of the berthing place based on the point cloud data output by the lidar 3. The berthing parameter calculation unit 16 calculates parameters (also referred to as "berthing parameters") necessary for berthing to the berthing place. Here, the berthing parameters include a distance between the target ship and the berthing place (a quay distance), an approach angle of the target ship to the berthing place, a speed at which the target ship approaches the berthing place (a berthing speed), etc. Further, the berthing parameter calculation unit 16 calculates information (also referred to as "reliability information") indicating the reliability of the berthing to the berthing place based on the processing result of the berthing place detection unit 15 and the berthing parameters. The controller 13 functions as "an acquisition unit", "a cluster generation unit", "a straight line generation unit", and a computer for executing a program.

The processing performed by the controller 13 is not limited to being implemented in software by a program, but may be implemented by any combination of hardware, firmware, and software. The processing performed by the controller 13 may also be implemented using user programmable integrated circuitry such as, for example, a FPGA (Field-Programmable Gate Array) or a microcomputer. In this case, the integrated circuit may be used to implement a program that the controller 13 executes in this example.

[Outline of berthing support processing]

Next, an outline of the berthing support processing executed by the information processing device 1 will be described. The information processing device 1 generates a straight line along the side surface of the berthing place (hereinafter also referred to as "berthing side straight line Ls") based on the point cloud data of the lidar 3 measured in the direction in which the berthing place is present. In other words, the berthing side straight line Ls is a straight line along the side surface of the quay at the berthing place. Then, the information processing device 1 calculates the berthing parameters such as the quay distance based on the berthing side straight line Ls.

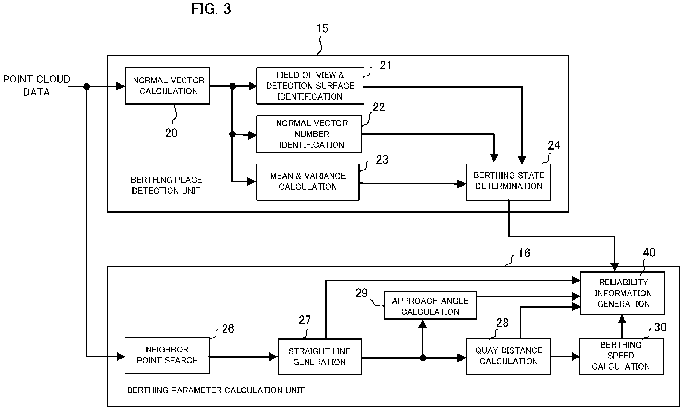

FIG. 3 is a functional block diagram of the berthing place detection unit 15 and the berthing parameter calculation unit 16 related to the berthing support processing. The berthing place detection unit 15 functionally includes a normal vector calculation block 20, a field of view and detection surface identification block 21, a normal vector number identification block 22, a mean and variance calculation block 23, and a berthing state determination block 24. The berthing parameter calculation unit 16 functionally includes a neighbor point search block 26, a straight line generation block 27, a quay distance calculation block 28, an approach angle calculation block 29, a berthing speed calculation block 30, and a reliability information generation block 40.

The normal vector calculation block 20 calculates normal vectors of a surface (also referred to as a "quay-facing surface") formed by the berthing place based on the point cloud data that the lidar 3 generates in the direction in which the berthing place exists. In this case, the normal vector calculation block 20 calculates the normal vectors described above based on the point cloud data generated by the lidar 3 whose measurement range includes the side of the berthing place of the target ship, for example. The information about the measurement range of the lidar 3 and the direction of the berthing place may be registered in advance in the memory 12, for example.

In this case, the normal vector calculation block 20 preferably performs down-sampling of the point cloud data and removal of the data obtained by the reflection of the laser beam by the water surface (also referred to as "water surface reflection data"), respectively.

In this case, first, the normal vector calculation block 20 removes, from the point cloud data generated by the lidar 3, the data existing below the water surface position as the water surface reflection data (i.e., erroneous detection data). Incidentally, the normal vector calculation block 20 estimates the water surface position based on the mean value in the height direction of the point cloud data generated by the lidar 3 when there is no object other than the water surface in the vicinity, for example. Then, the normal vector calculation block 20 performs down-sampling, which is a process of integrating the measured points into each grid space of a predetermined size, for the point cloud data obtained after removing the water surface reflection data. Then, the normal vector calculation block 20 calculates the normal vectors using a plurality of measured points in the periphery for each measured point indicated by the point cloud data after the down-sampling. Note that the down-sampling may be performed before the removal of the water surface reflection data.

The field of view and detection surface identification block 21 identifies the surface of the berthing place existing within the viewing angle of the lidar 3 (also referred to as "surface within field of view") and the surface of the berthing place detected based on the normal vectors calculated by the normal vector calculation block 20 (also referred to as "detection surface"). In this case, the field of view and detection surface identification block 21 determines whether or not the upper surface or/and the side surface of the berthing place is included as the surface within field of view and the detection surface.

The normal vector number identification block 22 extracts the normal vectors in the vertical direction and the normal vectors in the direction perpendicular thereto (i.e., the horizontal direction) from among the normal vectors calculated by the normal vector calculation block 20, respectively, and calculates the number of the normal vectors in the vertical direction and the number of the normal vectors in the horizontal direction. Here, the normal vector number identification block 22 regards the normal vector in the vertical direction as representing the normal to the measured point on the upper surface of the berthing place and regards the normal vector in the horizontal direction as representing the normal to the measured point on the side surface of the berthing place, and calculates each number of the normal vectors as one index of the reliability regarding the berthing place.

The mean and variance calculation block 23 extracts the normal vectors in the vertical direction and the normal vectors in the direction perpendicular thereto (i.e., the horizontal direction) from among the normal vectors calculated by the normal vector calculation block 20, and calculates the mean and variance of the normal vectors in the vertical direction and the mean and variance of the normal vectors in the horizontal direction.

The berthing state determination block 24 acquires the processing results of the field of view and detection surface identification block 21, the normal vector number identification block 22, and the mean and variance calculation block 23, which are identified or calculated based on the same point cloud data, as the determination results representing the detection state of the berthing place at the time of generating the point cloud data. The berthing state determination block 24 supplies the processing results of the field of view and detection surface identification block 21, the normal vector number identification block 22, and the mean and variance calculation block 23 to the berthing parameter calculation unit 16 as the determination results of the detection state of the berthing place.

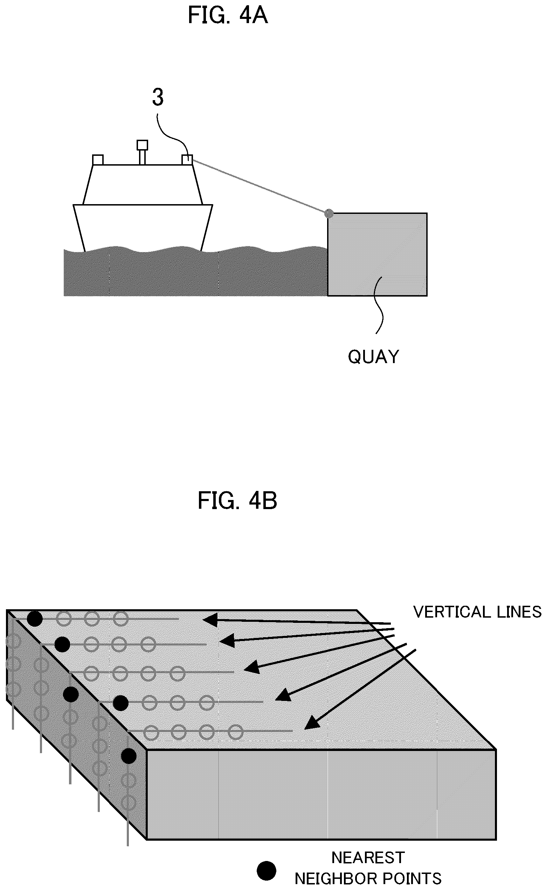

The neighbor point search block 26 performs a process of searching the nearest neighbor point to the target ship for each vertical line from the measured points constituting the point cloud data. For example, when the lidar 3 captures the quay to be berthed as shown in FIG. 4A, the nearest neighbor point, which is the closest point to the ship, becomes the edge portion between the upper surface and the side surface of the quay. According to such a process, the neighbor point search block 26 can acquire the nearest neighbor points as shown in FIG. 4B, for example. FIG. 4B is a perspective view of the quay showing the measured points of the quay which is the berthing place measured by the lidar, together with the nearest neighbor point of each vertical line.

The straight line generation block 27 generates the berthing side straight line Ls which is a straight line along the side surface of the berthing place based on the nearest neighbor points determined by the neighbor point search block 26.

The quay distance calculation block 28 calculates the quay distance corresponding to the shortest distance between the target ship and the berthing place based on the berthing side straight line Ls generated by the straight line generation block 27. Here, when there are a plurality of lidars 3 capable of measuring the berthing place, the quay distance calculation block 28 collects the point cloud data of the plurality of lidars 3 to generate the berthing side straight line Ls, and calculates the shortest distance with each lidar 3 as the quay distance. Alternatively, the quay distance calculation block 28 may generate the berthing side straight line Ls for each point cloud data of the lidar 3, and calculate the shortest distance between each berthing side straight line Ls and each lidar 3 as the quay distance. The quay distance calculation block 28 may calculate the shortest distance from a reference point such as the center position of the ship to the berthing side straight line Ls as the quay distance. Incidentally, instead of regarding the shortest distance for each lidar 3 as the quay distance, the quay distance calculation block 28 may determine the shortest one of shortest distances for the lidars 3 as the quay distance, and may determine the mean of these shortest distances as the quay distance.

The approach angle calculation block 29 calculates the approach angle of the target ship with respect to the berthing place based on the berthing side straight line Ls generated by the straight line generation block 27. Specifically, the approach angle calculation block 29 calculates the approach angle using "atan2" which is a function to obtain the arctangent from two arguments defining the tangent. More specifically, the approach angle calculation block 29 calculates the approach angle by calculating the function atan2 from the directional vector of the berthing side straight line Ls.

The berthing speed calculation block 30 calculates the berthing speed at which the target ship approaches the berthing place, based on the quay distance calculated by the quay distance calculation block 28. For example, the berthing speed calculation block 30 calculates the time change of the quay distance (the shortest distance) as the berthing speed.

The reliability information generation block 40 generates the reliability information on the basis of the processing results of the berthing state determination block 24, the straight line generation block 27, the quay distance calculation block 28, and the approach angle calculation block 29.

Here, a description will be given of a first specific example of generating the reliability information. The reliability information generation block 40 generates a flag for each element such as the viewing angle at the time of detection of the berthing place, the surface detection of the berthing place, the number and variance of the normal vectors, and generates a vector of the generated flags as the reliability information. Hereafter, it is assumed that the reliability of the corresponding element is high when the flag is "1" and the reliability of the corresponding element is low when the flag is "0".

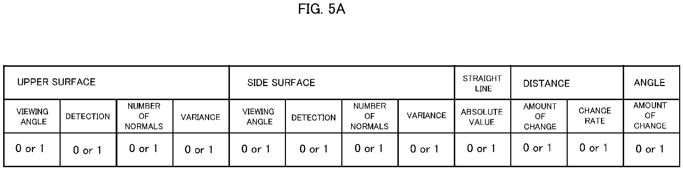

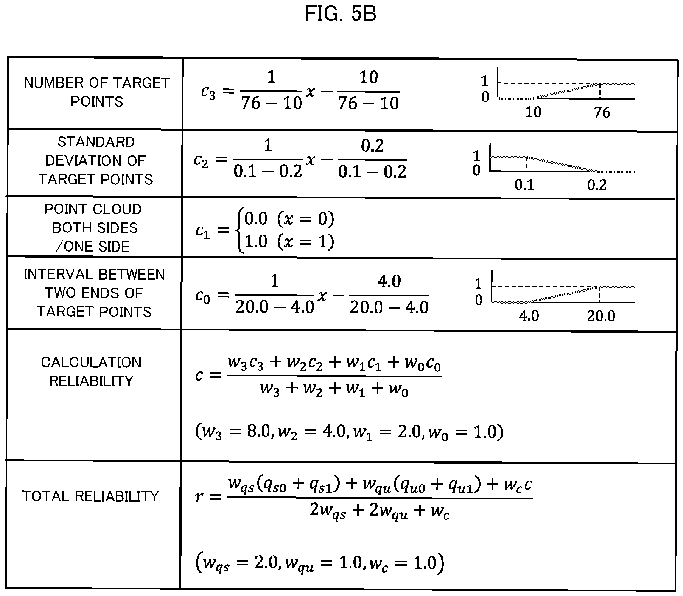

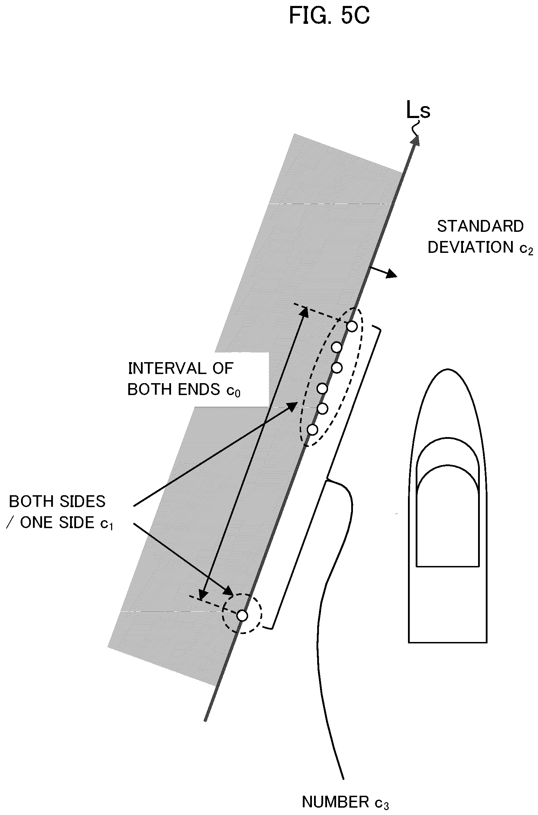

FIG. 5 is a diagram illustrating an example of the data structure of the reliability information generated by the reliability information generation block 40. As shown in FIG. 5, the reliability information has items of "top surface", "side surface", "straight line", "distance", and "angle". In addition, the item "top surface" has sub-items "viewing angle", "detection", "number of normals", and "variance". The item "side surface" has sub-items "viewing angle", "detection", "number of normals", and "variance". The item "straight line" has a sub-item "absolute value". The item "distance" has a sub-item "amount of change" and "change rate", and the item "angle" has a sub-item "amount of change".

Here, the reliability information generation block 40 registers, in the sub-item "viewing angle" of the item "upper surface", a flag " 1" when the upper surface of the berthing place is within the range of the viewing angle and a flag "0" when the upper surface is out of the viewing angle. The reliability information generation block 40 registers, in the sub item "detection" of the item "upper surface", a flag "1" when the upper surface of the berthing place is the detection surface and a flag "0" when the upper surface is not the detection surface. Further, the reliability information generation block 40 registers, in the sub-item "number of normals" of the item "upper surface", a flag "1" when the number of normal vectors with respect to the upper surface of the berthing place is equal to or larger than a predetermined threshold value (for example, 10) and "0" when the number of normal vectors is smaller than the threshold value.

Further, the reliability information generation block 40 registers, in the sub-item "variance" of the item "upper surface", a flag "1" when the variance of x,y,z component of the normal vector with respect to the upper surface of the berthing place is smaller than a predetermined threshold value (for example, 1.0) and a flag "0" when any of the variances is equal to or larger than the threshold value. Further, the reliability information generation block 40 registers, in each sub-item of the item "side surface", the flags defined by the same rules as the sub-items of the item "upper surface".

Further, the reliability information generation block 40 registers, in the sub-item "absolute value" of the item "straight line", a flag representing the reliability of the berthing side straight line Ls generated by either the first generation method or the second generation method described later. For example, when the lidar 3 is respectively provided at the front part and the rear part of the target ship, the reliability information generation block 40 registers a flag "1" when each of the differences in the components between the direction vector of the berthing side straight line Ls generated by either the first generation method or the second generation method and the direction vector of the straight line connecting the nearest neighbor points of the lidars 3 at the front part and the rear part of the target ship is smaller than a threshold value, and "0" when any one of the differences is equal to or larger than the threshold value.

Further, the reliability information generation block 40 registers, in the sub-item "amount of change" of the item "distance", a flag " 1" when the amount of change of the quay distance calculated by the quay distance calculation block 28 from one time point before is smaller than a predetermined threshold value (e.g., 1.0m) and a flag "0" when the amount of change is equal to or larger than the threshold value . Further, the reliability information generation block 40 registers, in the sub-item "change rate" of the item "distance", a flag "1" when the change rate of the quay distance calculated by the quay distance calculation block 28 from one time point before is smaller than a predetermined threshold value (for example, $\pm$ 10%) and a flag "0" when the change rate is equal to or larger than the threshold value. The reliability information generation block 40 registers, in the sub item "amount of change" of the item "angle", a flag " 1" when the amount of change of the approach angle calculated by the approach angle calculation block 29 from one time point before is smaller than a predetermined threshold value (for example, 1.0 degrees) and a flag "0" when the amount of change is equal to or larger than the threshold value.

Incidentally, each of the threshold values described above is set to a suitable value previously stored in the memory 12 or the like, for example. Further, the reliability information may be generated for each lidar 3.

Next, a second specific example of generating the reliability information will be described. FIG. 5B is a diagram illustrating an example of indexes and reliability included in the reliability information. FIG. 5C is a bird's-eye view of the target ship and the berthing place, showing the indexes shown in FIG. 5B. Here, the measured point near the edge of the berthing place is also referred to as the "target point".

The index "$c_3$" is an index based on the number of the target points. Here, as an example, the index $c_3$ is represented by a linear function using the number of the target points as the variable x. The index "$c_2$" is an index based on the standard deviation of the target points. Here, as an example, the index $c_2$ is represented by a linear function using the standard deviation of the target points as the variable x. The index "$c_1$" is an index indicating whether or not two lidars 3 were able to measure both the front side and the rear side of the quay. Here, as an example, the index $c_1$ is set to "1.0" when both sides of the quay were measured, and is set to "0.0" when only one side was measured. The index "$c_0$" is an index based on the interval between the two ends of the target points (both ends along the berthing side straight line Ls), and is represented by a linear function using the above-described interval between the two ends as the variable x. The indexes $c_0$ to $c_3$ are calculated to be limited in a range from 0 to 1.

The calculation reliability "c" is reliability based on the indexes $c_0$ to $c_3$ described above. Here, the calculation reliability c is a weighted mean of the indexes $c_0$ to $c_3$ using the weighting factors "$w_0$" to "$w_3$" according to the importance with respect to the indexes $c_0$ to $c_3$. Further, an exemplary setting of the weighting factors $w_0$ to $w_3$ is shown. Since each index $c_0$ to $c_3$ is in the range from 0 to 1, the calculation reliability c, which is the weighted mean of them, is also calculated as a numerical value in the range from 0 to 1.

A total reliability "r" is reliability based on a side surface detection reliability "$q_s$" which is a reliability regarding detection of the side surface of the quay, a top detection reliability "$q_u$" which is a reliability regarding detection of the top surface of the quay, and the calculation reliability c. Here, the total reliability r is a weighted mean of the reliability $q_s$, $q_u$, c using the weighting factors "$w_{qs}$", "$w_{qu}$", "$w_c$" according to the importance with respect to the reliability $q_s$, $q_u$, $m_o$, $m_l$, c. Further, an exemplary setting of the weighting factors $w_{qs}$, $w_{qu}$, $w_{m0}$, $w_{m1}$, $w_c$ is shown. For example, the information processing device 1 may calculate the side surface detection reliability $q_s$ based on the item "side surface" of the reliability information shown in FIG. 5A, and calculate the top surface detection reliability $q_u$ based on the item "top surface" of the reliability information in FIG. 5A. Both the side surface detection reliability $q_s$ and the top surface detection reliability $q_u$ are calculated to be in the range from 0 to 1. In addition, when both the front part and the rear part of the quay are detected, the side surface detection reliability $q_{s0}$ of the front quay, the side surface detection reliability $q_{s1}$ of the rear quay, the top surface detection reliability $q_{u0}$ of the front quay, and the top surface detection reliability $q_{u1}$ of the rear quay are calculated. Since the side surface detection reliability $q_s$, the top surface detection reliability $q_u$ and the calculation reliability c are in the range from 0 to 1, the total reliability r, which is the weighted mean of them, is also calculated as a numerical value in the range from 0 to 1. Therefore, it can be seen that the closer the total reliability r is to 1, the higher the reliability of the calculated berthing parameters, and the closer the total reliability r is to 0, the lower the reliability of the calculated berthing parameters.

That is, the reliability information generated by the second specific example includes the indexes and reliability calculated by the above-described method.

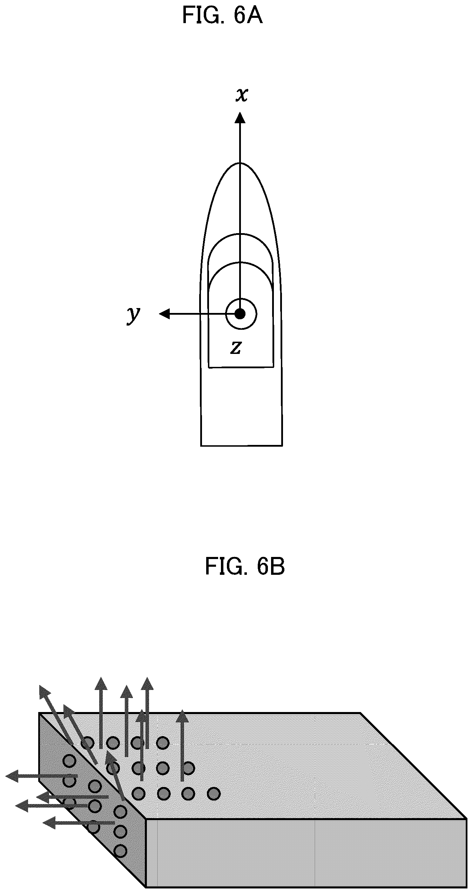

Next, a specific example of the processing by the normal vector calculation block 20, the normal vector number identification block 22, and the mean and variance calculation block 23 will be described with reference to FIGS. 6A and 6B.

FIG. 6A is a diagram showing an example of a ship coordinate system based on the hull of the target ship. As shown in FIG. 6A, here, the front (forward) direction of the target ship is defined as "x" coordinate, the side direction of the target ship is defined as "y" coordinate, and the height direction of the target ship is defined as "z" coordinate. Then, the measurement data of the coordinate system based on the lidar 3, which is measured by the lidar 3, is transformed into the ship coordinate system shown in FIG. 6A. Incidentally, the processing of converting the point cloud data of the lidar-based coordinate system installed in the mobile body to the coordinate system of the mobile body is disclosed in the International Publication WO2019/188745, for example.

FIG. 6B is a perspective view of a berthing place (quay in this case) showing the measured points representing the measured position measured by the lidar 3 and the normal vectors calculated based on the measured points with respect to the quay. In FIG. 6B, the measured points are shown by dots, and the normal vectors are shown by arrows. FIG. 6B shows an example in which both the upper surface and the side surface of the quay could be measured by the lidar 3.

As shown in FIG. 6B, the normal vector calculation block 20 calculates the normal vectors for the measured points on the side surface and the upper surface of the quay. Since the normal vector is a vector perpendicular to the plane or curved surface of interest, the normal vector is calculated using a plurality of measured points that forms a plane. Therefore, the normal vector calculation block 20 sets a grid having a predetermined length in the vertical and horizontal directions or a circle having a radius of a predetermined length, and calculates the normal vector using the measured points existing therein. In this case, the normal vector calculation block 20 may calculate the normal vector for each measured point, or may calculate the normal vector for each predetermined interval. Then, the normal vector number identification block 22 determines the normal vector whose z component is larger than a predetermined threshold value as the normal vector oriented in the vertical direction. It is assumed that the normal vector is vectorized to be a unit vector. Further, the normal vector number identification block 22 determines the normal vector whose z component is smaller than the predetermined threshold value as the normal vector oriented in the horizontal direction. Then, the normal vector number identification block 22 identifies the number of normal vectors in the vertical direction (five in this case) and the number of the normal vectors in the horizontal direction (four in this case). Further, the mean and variance calculation block 23 calculates the mean and variance of the normal vectors in the vertical direction and the mean and variance of the normal vectors in the horizontal direction. It is noted that the normal vectors become oblique at the edge portion because the measured points around the edge portion exist on the upper and side surfaces.

[Details of method of generating the berthing side straight line]

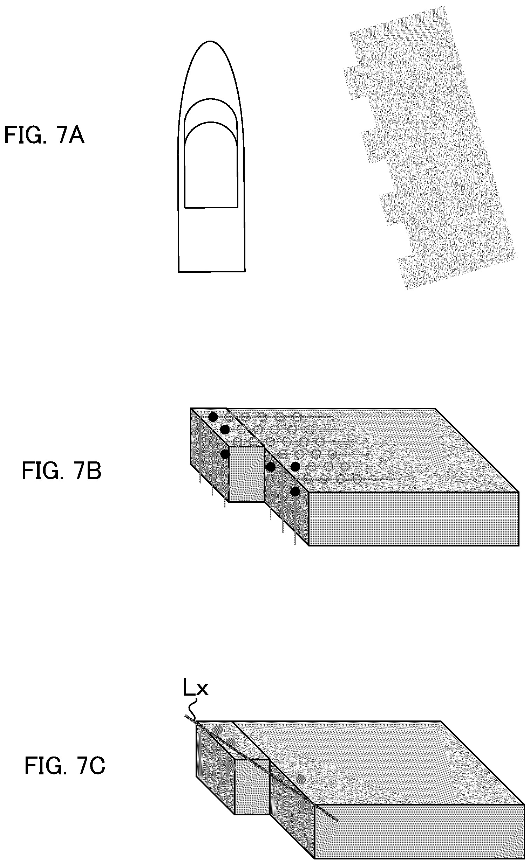

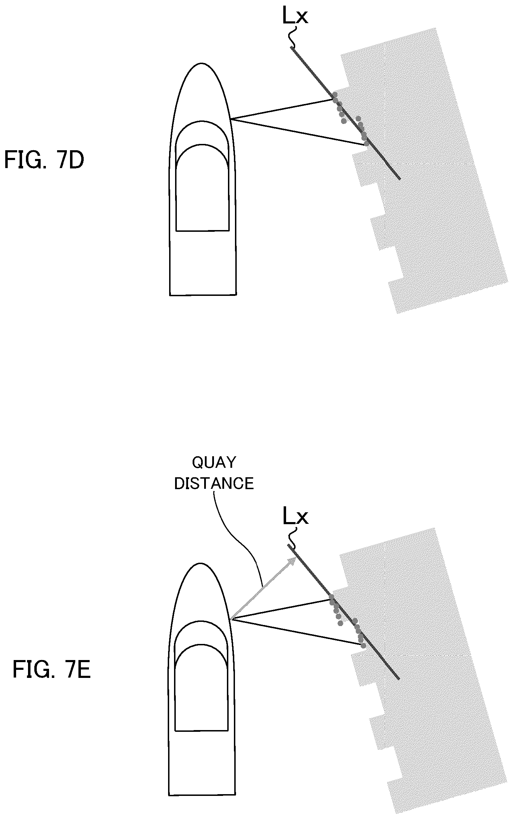

FIG. 7A is a view showing a berthing situation in which a pie-shaped fender or the like is installed on the side face of the quay. In this case, it is necessary to calculate the distance to the fender as the quay distance. Note that a quay with a fender will also be referred to as a quay. As described above, the berthing side straight line Ls may be calculated using a set of nearest neighbor points for each vertical line as described above. However, since there are portions with and without fenders, an inaccurate straight line Lx may be generated as shown in FIGS. 7B to 7D. If the inaccurate straight line Lx such as the one shown in FIG. 7D is generated, the quay distance, which is the shortest distance to the straight line Lx, also becomes inaccurate (see FIG. 7E). Therefore, it is necessary to extract only the nearest neighbor points of the fender portion to generate the berthing side straight line Ls. The methods of generating the berthing side straight line Ls (a first generation method and a second generation method) will be described below.

(First generation method)

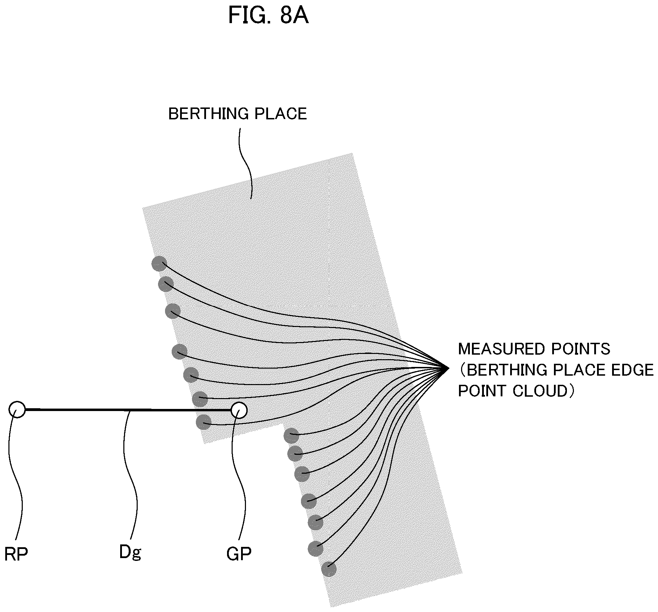

The first generation method is a method to obtain the berthing side straight line Ls by performing a clustering process based on the point spacing. FIG. 8A is a view showing a part of a quay where the lidar 3 detected the portions with and without the fender.

The berthing parameter calculation unit 16 calculates the center of gravity position GP in the point cloud data (hereinafter, also referred to as "berthing place edge point cloud") including a plurality of measured points constituting the edge of the berthing place (specifically, the boundary of the upper surface and the side surface). Further, the berthing parameter calculation unit 16 calculates the distance Dg between the reference position RP in the target ship and the center of gravity position GP. That is, the distance Dg can be treated as a mean distance between the reference position RP and the plurality of measured points included in the berthing place edge point cloud. The reference position RP may be a predetermined position set in the target ship, or may be a position where the lidar 3 is installed in the target ship. Further, the center of gravity position GP, the reference position RP, and the range Dg can be expressed as shown in FIG. 8A, for example.

The berthing parameter calculation unit 16 calculates the grouping threshold Gth by applying a coefficient k, a resolution $\theta_r$ of the lidar 3, and the distance Dg to the following Formula (1). The resolution $\theta_r$ is a value expressed as an angle (radian) between two measured points adjacent to each other. The grouping threshold Gth calculated by Formula (1) below is a value that is calculated as a value in meters and is used in clustering described below.

[Formula 1]

$$Gth = k \times \theta r \times Dg \qquad (1)$$

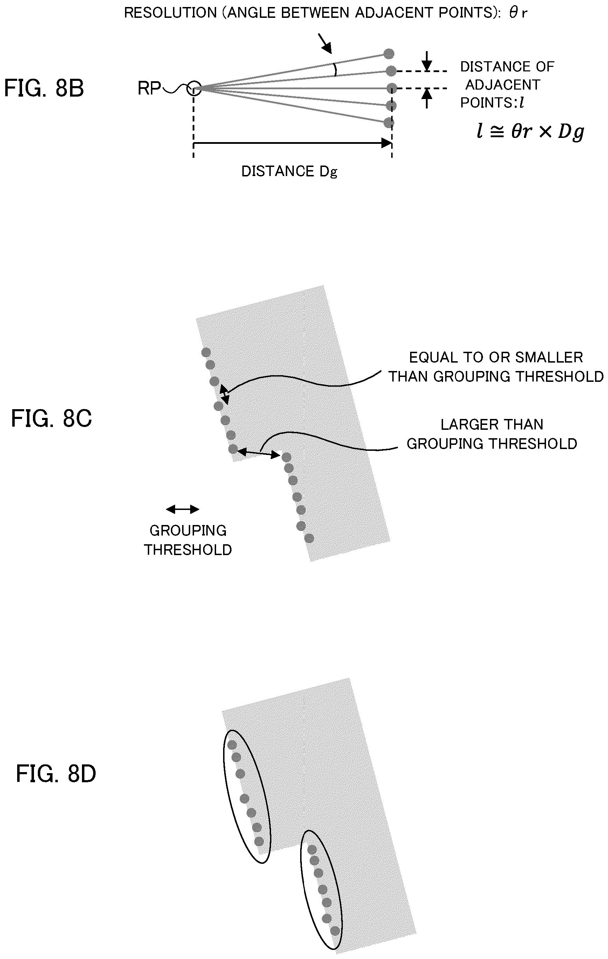

Here, as shown in FIG. 8B, the value obtained by multiplying the resolution $\theta_r$ and the distance Dg is a value substantially equal to the mean distance between the two measured points adjacent to each other. Therefore, for example, when the coefficient k of the above Formula (1) is set to 5, the grouping threshold Gth is calculated as about 5 times the mean distance between two measured points adjacent to each other. FIG. 8B is a diagram for explaining parameters related to calculation of the grouping threshold.

For example, when the lidar 3 measures an object on the water surface in front of the berthing place, the position of the center of gravity position GP is shifted toward the ship, and it may not be possible to calculate an appropriate grouping threshold Gth. This is because the grouping threshold Gth becomes smaller and the clustering condition becomes severe when the range Dg becomes shorter than the original value. Thus, there is a risk that clusters are not generated. Therefore, according to the present embodiment, when the sum value of the flags registered in the sub items other than the sub items "absolute value" among the reliability information generated according to the first specific example described above in the process of the previous time point is equal to or smaller than a predetermined threshold value, the berthing parameter calculation unit 16 sets the grouping threshold Gth to a predetermined value (for example, "1"). Further, according to the present embodiment, when the value of one or more flags registered in each sub-item other than the sub-item "absolute value" of the reliability information generated according to the first specific example described above in the process of the previous time point is equal to or smaller than a predetermined threshold value, the berthing parameter calculation unit 16 sets the grouping threshold Gth to a predetermined value (for example, "1"). Further, for example, when the total reliability r included in the reliability information generated according to the second specific example described above in the process of the previous time point is equal to or smaller than 0.3, the berthing parameter calculation unit 16 sets the grouping threshold Gth to a predetermined value (for example, "1"). Therefore, when the reliability of the previous time point is high, the berthing parameter calculation unit 16 determines that the reliability of the present distance Dg is also high, and generates an appropriate grouping threshold Gth according to the distance Dg. When the reliability of the previous time point is low, the berthing parameter calculation unit 16 determines that the reliability of the present distance Dg is low, and sets the grouping threshold Gth to a larger fixed value. By this, the prevention of the risk that the cluster is not generated, and the appropriate cluster generation are ensured at the same time.

Incidentally, when the reliability of the previous time point is low, instead of setting the grouping threshold Gth to a predetermined value, a larger value may be calculated as the grouping threshold Gth by setting the coefficient k used in Formula (1) to a larger value.

The berthing parameter calculation unit 16 uses the grouping threshold Gth to perform clustering for a plurality of measured points included in the berthing place edge point cloud.

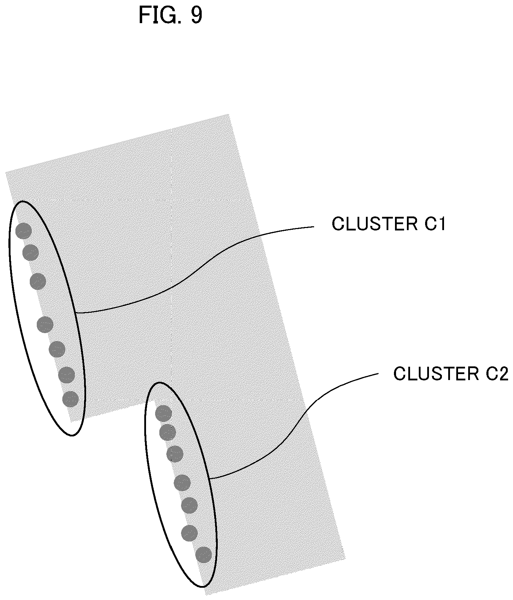

Specifically, for example, when the distance between two measured points adjacent to each other is equal to or smaller than the grouping threshold Gth, the berthing parameter calculation unit 16 classifies those two measured points into the same cluster (see FIGS. 8C and 8D). Further, for example, when the distance between the two measured points adjacent to each other is larger than the grouping threshold Gth, the berthing parameter calculation unit 16 classifies those two measured points into different clusters (see FIGS. 8C and 8D). FIGS. 8C and 8D are diagrams showing an exemplary process related to clustering. According to such a process, for example, a plurality of measured points included in the berthing place edge point cloud shown in FIG. 8A is classified into a cluster C1 and a cluster C2 as shown in FIG. 9. Further, according to the process as described above, for example, it is possible to classify the measured points in the portion of the quay with the fender and the measured points in the portion of the quay without the fender into clusters that are different from each other. FIG. 9 is a diagram illustrating an exemplary case in which clustering is performed for a plurality of measured points included in the berthing place edge point cloud shown in FIG. 8A.

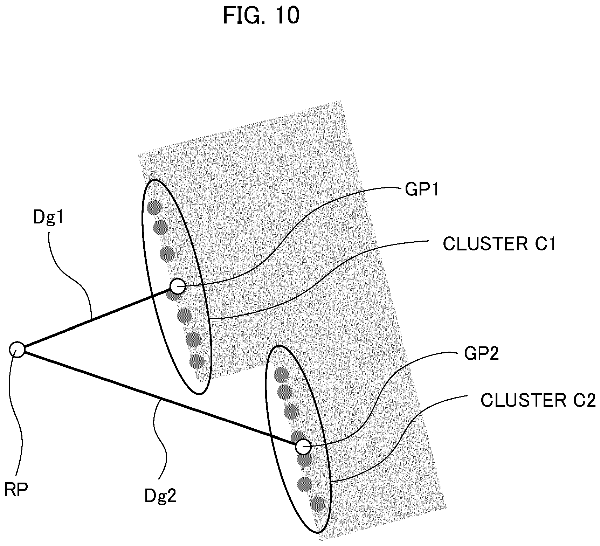

The berthing parameter calculation unit 16 calculates the center of gravity positions GP1, GP2, ..., GPn of the point cloud data including a plurality of measured points for each of n clusters obtained by the clustering. Further, the berthing parameter calculation unit 16 calculates the distances between the center of gravity positions GP1, GP2, ..., GPn and the reference position RP. According to such a process, for example, as shown in FIG. 10, the distance Dg1 between the center of gravity position GP1 of the cluster C1 and the reference position RP is calculated. Further, according to the above-described process, for example, as shown in FIG. 10, the distance Dg2 (>Dg1) between the center of gravity position GP2 of the cluster C2 and the reference position RP is calculated. FIG. 10 is a diagram illustrating examples of distances Dg1 and Dg2 that are calculated when clustering is performed as shown in FIG. 9.

The berthing parameter calculation unit 16 detects the smallest distance Dgk ($1 \leq k \leq n$) from the distances Dg1, Dg2, ..., Dgn calculated for each of the n clusters. Further, the berthing parameter calculation unit 16 selects a plurality of measured points included in the cluster Ck for which the range Dgk is calculated as the point cloud data TDA used for the generation of the berthing side straight line Ls.

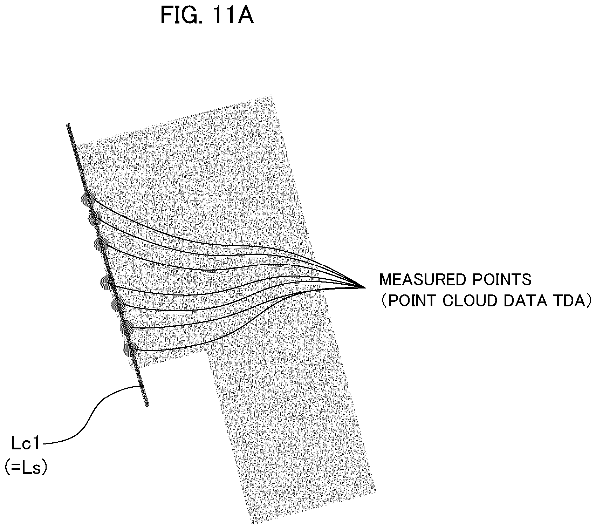

The berthing parameter calculation unit 16 calculates a vector of a first principal component (a vector of a principal component axis having the largest eigenvalue) by performing principal component analyses on a plurality of measured points included in the point cloud data TDA. Then, the berthing parameter calculation unit 16 generates a straight line Lck corresponding to a plurality of measured points included in the cluster Ck on the basis of the vector of the first principal component described above and the center of gravity position GPk of the cluster Ck, and acquire the generated straight line Lck as the berthing side straight line Ls. According to such a process, for example, as shown in FIG. 11A, it is possible to generate a straight line Lc1 corresponding to a plurality of measured points included in the clustered C1 of FIG. 10 as the berthing side straight line Ls. FIG. 11A shows a straight line Lc1 generated as the berthing side straight line Ls by the first generation method.

Incidentally, when one cluster is obtained by the clustering (when a plurality of clusters is not obtained), the berthing parameter calculation unit 16 may treat the one cluster as the cluster having the smallest distance from the reference position RP, and generate the berthing side straight line Ls using the plurality of measured points included in the one cluster.

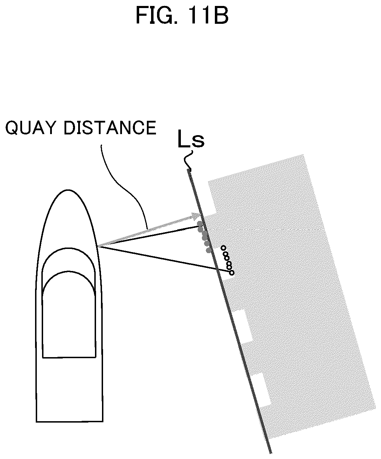

According to the above-described process, the berthing parameter calculation unit 16 may generate one or more clusters in which a plurality of measured points included in the berthing place edge point cloud are divided by the clustering. Further, according to the process described above, the berthing parameter calculation unit 16 can generate a straight line along the berthing place where the ship is to be berthed, based on the cluster having the shortest distance to the ship. Further, for example, as shown in FIG. 11B, the berthing parameter calculation unit 16 can generate an appropriate berthing side straight line Ls corresponding to the berthing place even for the berthing place where the pie-type fender or the like is installed on the side surface of the quay. As a result, the quay distance can be accurately calculated by determining the length of the perpendicular to the berthing side straight line Ls. FIG. 11B is a diagram showing an example of generating the berthing side straight line Ls for the place where a pie-type fender or the like is installed on the side surface of the quay.

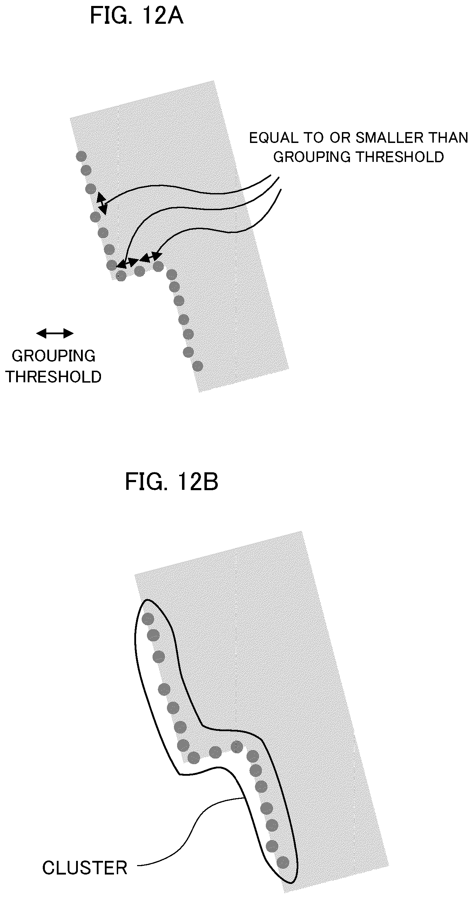

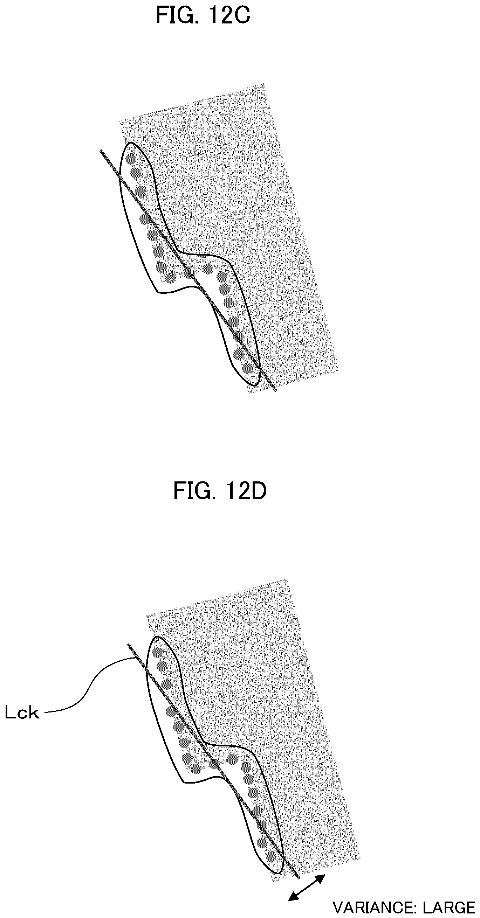

By the way, according to the above-described process, for example, when the lidar 3 acquires the measured points from the lateral portion of the fender, there is a possibility that a plurality of measured points included in the berthing place edge point cloud cannot be appropriately clustered and an inappropriate straight line may be generated as the berthing side straight line Ls. As shown in FIG. 12A, if the measured points are also acquired from the lateral portion of the fender and the point spacing at that portion is shorter than the grouping threshold, the measured points are not divided into two clusters, resulting in a single cluster as shown in FIG. 12B. Thus, the generated straight line becomes inaccurate as shown in FIG. 12C. Therefore, in the first generation method, if the above-described situation occurs, the newly generated straight line is discarded, and the previously generated straight line is acquired as the berthing side straight line Ls. Specific examples of such a process will be described below.

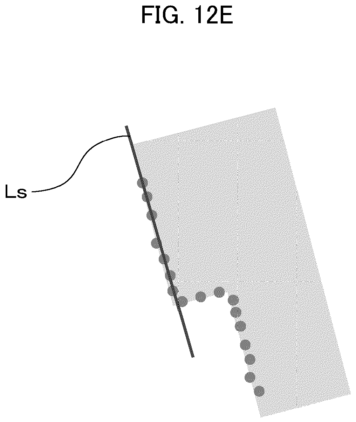

The berthing parameter calculation unit 16 calculates the variance or the standard-deviation with respect to the straight line Lck for the measured points included in the straight line Lck generated as described above. Incidentally, the variance with respect to the straight line Lck is calculated as shown in FIG. 12D, for example. When the calculated variance or standard-deviation as described above is equal to or smaller than a predetermined threshold value, the berthing parameter calculation unit 16 acquires the newly generated straight line Lck as the berthing side straight line Ls and stores the data indicating the straight line Lck in the memory 12. Further, when the variance or standard deviation calculated as described above is larger than the predetermined threshold value, the berthing parameter calculation unit 16 discards the newly generated linear Lck, and reads out the berthing side straight line Ls stored in the memory 12 to use it as the berthing side straight line Ls for this time (see FIG. 12E).

(Second generation method)

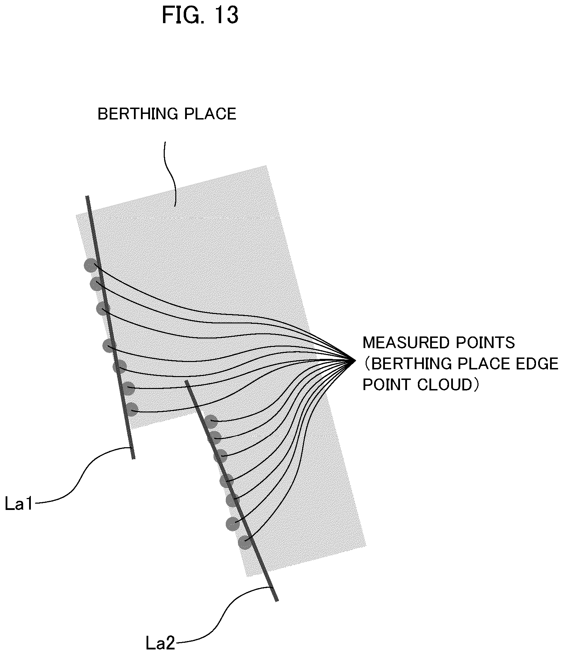

The second generation method is a method in which a straight line is searched by a Hough transform, and a clustering process based on the generated approximate straight line is carried out to obtain a berthing side straight line Ls. FIG. 13 is a diagram illustrating an example of an approximate straight line that approximately represents an edge portion at a berthing place.

The berthing parameter calculation unit 16 calculates approximate straight lines La approximately representing the edge portion at the berthing place by performing a straight line search by the Hough transform for a plurality of measured points included in the berthing place edge point cloud. According to such a process, for example, it is possible to calculate the approximate straight lines La1 and La2 as shown in FIG. 13.

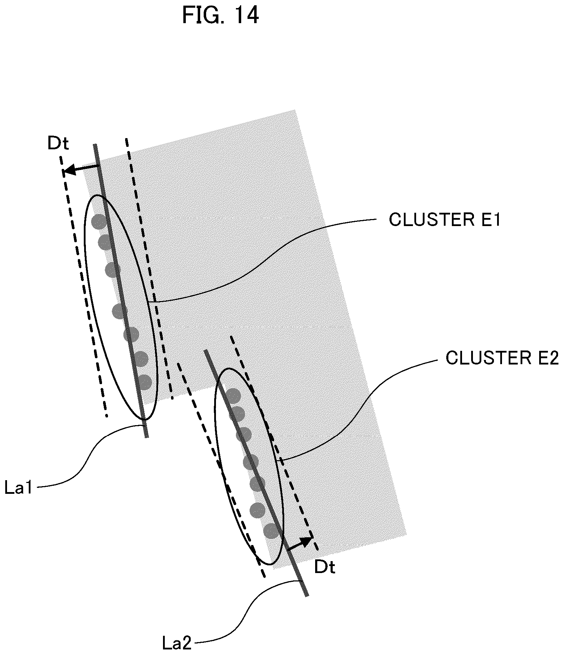

The berthing parameter calculation unit 16 performs clustering for the plurality of measured points on the basis of the distance between the approximate straight lines La and the plurality of measured points included in the berthing place edge point cloud. Specifically, the berthing parameter calculation unit 16 classifies the measured points whose the distance to the approximate line is equal to or smaller than a predetermined threshold Dt into the same cluster, for example. According to such clustering, a plurality of measured points included in the berthing place edge point cloud are classified into one of the clusters of the same number as as the number of the approximate straight lines La. Further, according to the above-described clustering, for example, as shown in FIG. 14, the measured points whose distance to the approximate straight line La1 is equal to or smaller than the predetermined threshold Dt is classified into the cluster E1. Further, according to the above-described clustering, for example, as shown in FIG. 14, the measured points whose distance to the approximate straight line La2 is equal to or smaller than the predetermined threshold Dt is classified into the cluster E2. FIG. 14 is a diagram illustrating an example of performing clustering of a plurality of measured points included in the berthing place edge point cloud of FIG. 13 using approximate straight lines obtained by a Hough transform.

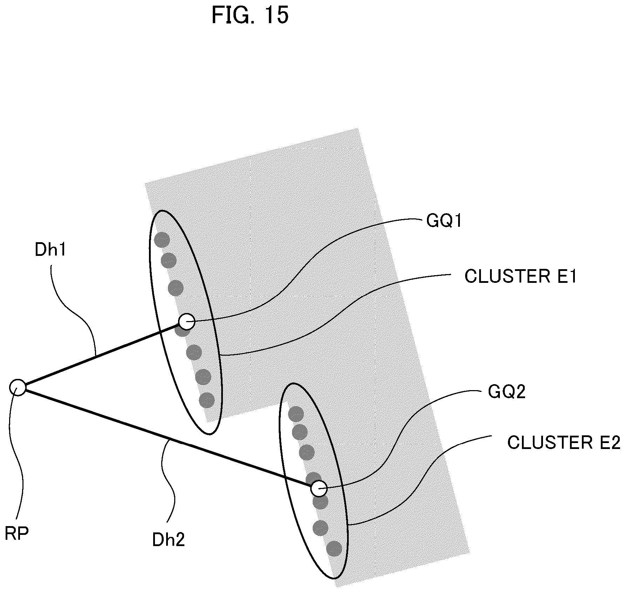

The berthing parameter calculation unit 16 calculates the center of gravity positions GQ1, GQ2, ..., GQn in the point cloud data including a plurality of measured points for each of the n clusters obtained by clustering using the n approximate straight lines La obtained by the Hough transform. Further, the berthing parameter calculation unit 16 calculates the distances between the center of gravity positions GQ1, GQ2, ..., GQn and the reference position RP. According to such a process, for example, as shown in FIG. 15, the distance Dh1 between the center of gravity position GQ1 of the cluster E1 and the reference position RP is calculated. Further, according to the above-described process, for example, as shown in FIG. 15, the distance Dh2 (>Dh1) between the center of gravity position GQ2 of the cluster E2 and the reference position RP is calculated. FIG. 15 is a diagram illustrating examples of distances Dh1 and Dh2 that are calculated when clustering is performed as shown in FIG. 14.

The berthing parameter calculation unit 16 detects the smallest distance Dhm ($1 \leqq m \leqq n$) from the distances Dh1, Dh2, ..., Dhn calculated for each of the n clusters. Further, the berthing parameter calculation unit 16 selects the plurality of measured points included in the cluster Em for which the distance Dhm is calculated as the point cloud data TDB used for the generation of the berthing side straight line Ls.

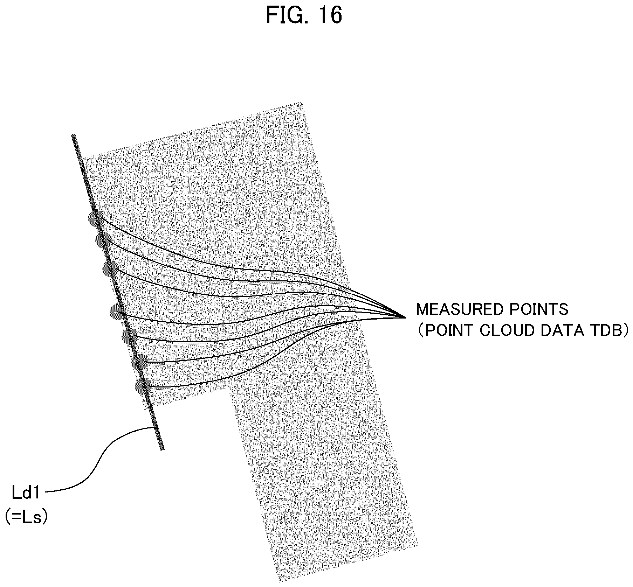

The berthing parameter calculation unit 16 calculates the vector of the first principal component (the vector of the principal component axis having the largest variance) by performing principal component analyses for the plurality of measured points included in the point cloud data TDB. Then, the berthing parameter calculation unit 16 generates a straight line Ldm corresponding to the plurality of measured points included in the cluster Em on the basis of the vector of the first principal component described above and the center of gravity position GQm of the cluster Em, and acquires the generated straight line Ldm as the berthing side straight line Ls. According to such a process, for example, as shown in FIG. 16, it is possible to generate the straight line Ld1 corresponding to the plurality of measured points included in the clustered E1 of FIG. 15 as the berthing side straight line Ls. FIG. 16 is a diagram illustrating an example of a straight line Ld1 generated as the berthing side straight line Ls by the second generation method. Generally, the straight line obtained by the Hough transform is an approximate straight line. However, when the required accuracy of the calculated berthing parameters are not high, the approximate straight line La may be used as the berthing side straight line Ls at the time when the distance Dhm is detected.

Incidentally, when one cluster is obtained by the clustering (when a plurality of clusters is not obtained), the berthing parameter calculation unit 16 may treat the one cluster as a cluster having the smallest distance from the reference position RP, and may generate the berthing side straight line Ls using the plurality of measured points included in the one cluster.

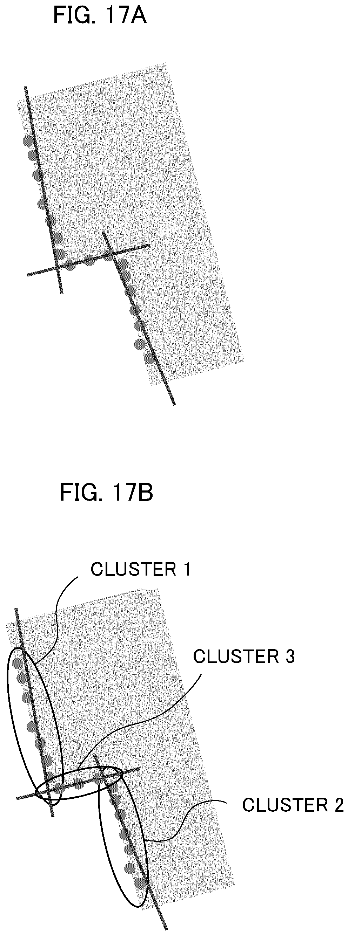

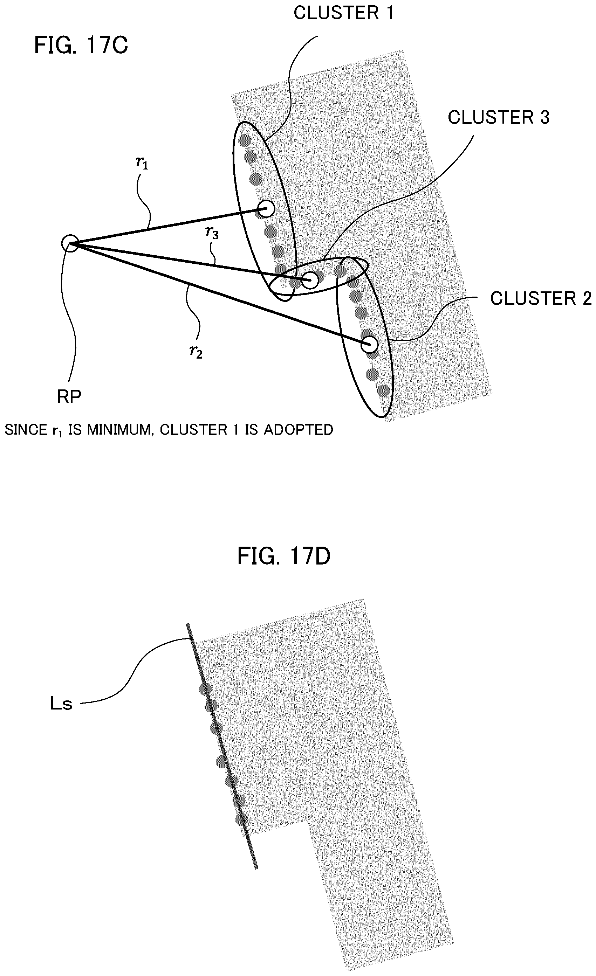

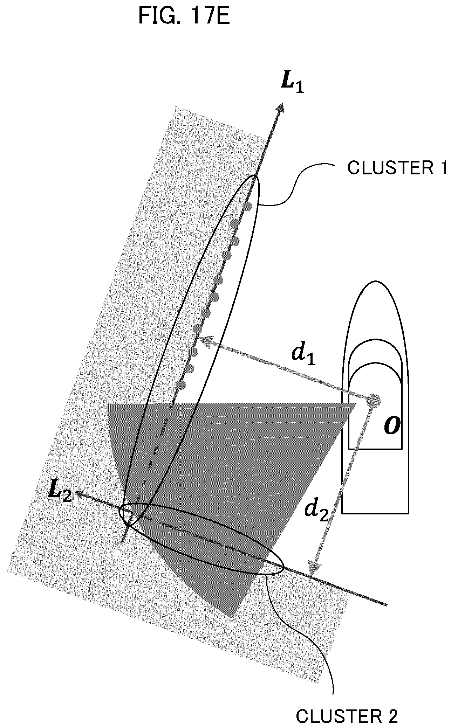

According to the process described above, for example, when the lidar 3 acquires the measured points on the lateral portion of the fender, an approximate straight line approximately representing the edge portion of the lateral portion of the fender is generated (see FIG. 17A). However, according to the above-described process, it is possible to generate the berthing side straight line Ls using the plurality of measured points included in one cluster having the smallest distance between the center of gravity position of the clusters obtained by clustering and the reference position RP. As shown in FIG. 17B, when three approximate straight lines are generated by the straight line search using the Hough transform, clustering is performed based on the distances from each of the approximate straight lines. Therefore, by comparing the distances to the center of gravity of the clusters as shown in FIG. 17C, the cluster of the fender portion that protrudes most toward the sea is extracted. Consequently, the berthing side straight line Ls is generated as shown in FIG. 17D. That is, according to the second generation method, even when the lidar 3 acquires the measured points on the lateral portion of the fender, it is possible to generate an appropriate berthing side straight line Ls. Further, according to the second generation method, for example, even when the lidar 3 measures a plurality of directions of quay, it is possible to generate appropriate berthing side straight lines Ls corresponding to each of the plurality of directions of the quay, such as the straight line $L_1$ and the straight line $L_2$ of FIG. 17E. When there are a plurality of approximate straight lines generated by the Hough transform, the difference in the direction vectors of them is large, and the number of points (data) belonging to the respective clusters is equal to or larger than a predetermined value, the berthing parameter calculation unit 16 determines that there are quays in a plurality of directions as shown in FIG. 17E, and generates the berthing side straight line Ls in each direction to determine the distance to the respective quay. In FIG. 17E, the distance $d_1$ represents the quay distance from the origin O to the straight line $L_1$, and the distance $d_2$ represents the quay distance from the origin O to the straight line $L_2$. In FIG. 17C, the distances $r_1$, $r_2$ and $r_3$ represent the distance from the reference position RP to the center of gravity.

(Processing flow)

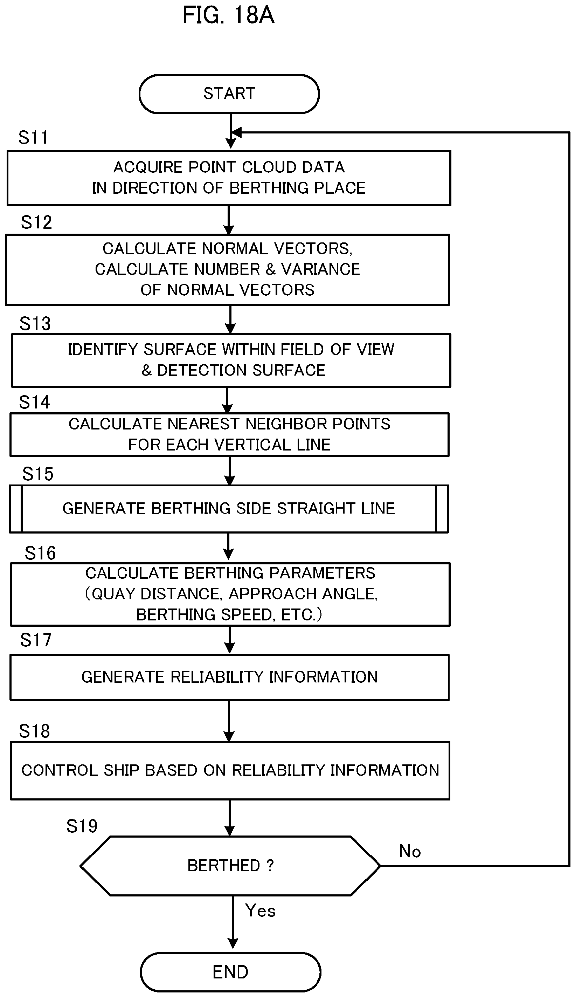

FIG. 18A is a flowchart showing an outline of berthing support processing in the present embodiment. The information processing device 1 repeatedly executes the processing of the flowchart shown in FIG. 18A.

First, the information processing device 1 acquires point cloud data in the direction of the berthing place (step S11). In this case, the information processing device 1 acquires the point cloud data generated by the lidar 3 whose measurement range includes the berthing side of the target ship, for example. The information processing device 1 may further perform down-sampling of the acquired point cloud data and removal of the data reflected by the water surface.

Next, the berthing place detection unit 15 of the information processing device 1 calculates the normal vectors based on the point cloud data acquired in step S11 (step S12). Further, in step S12, the berthing place detection unit 15 calculates the number of the normal vectors and the variance of the normal vectors. Further, the berthing place detection unit 15 identifies the surface within field of view and the detection surface, based on the result of the process in step S12 (step S13).

Next, the berthing parameter calculation unit 16 performs the nearest neighbor search for each vertical line on the basis of the point cloud data acquired in step S11 and calculates the nearest neighbor point for each vertical line (step S14).

Next, the berthing parameter calculation unit 16 generates the berthing side straight line Ls using the nearest neighbor point for each vertical line obtained in step S14 (step S15). In this case, the berthing parameter calculation unit 16 generates the berthing side straight line Ls based on the first generation method or the second generation method described above.

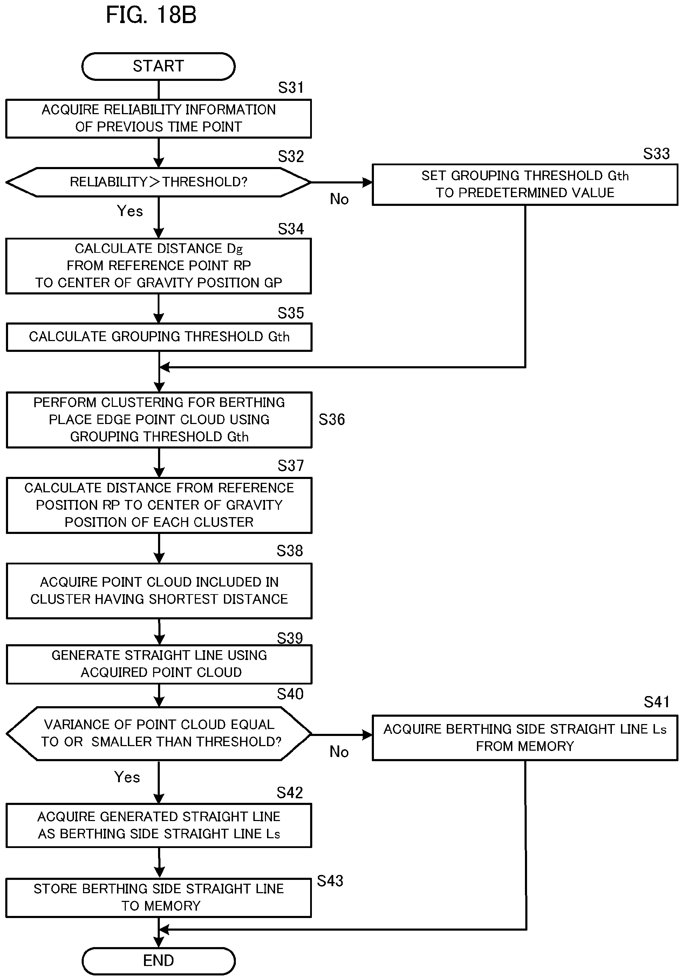

Here, the process according to the first generation method of generating the berthing side straight line performed in step S15 will be described with reference to FIG. 18B. FIG. 18B is a flowchart showing an example of processing according to the first generation method of the berthing side straight line.

After acquiring the reliability information generated in the process of the previous time point from the memory 12 (step S31), the berthing parameter calculation unit 16 determines whether or not the reliability included in the reliability information is larger than a predetermined threshold value (step S32).

When the reliability is equal to or smaller than the predetermined threshold value (step S32; No), the berthing parameter calculation unit 16 sets the grouping threshold Gth to a predetermined value (step S33), and performs the process of step S36 described below. When the reliability is larger than the predetermined threshold value (step S32; Yes), the berthing parameter calculation unit 16 calculates the distance Dg from the reference position RP to the center of gravity position GP (step S34), calculates the grouping threshold Gth based on the distance Dg (step S35), and performs the process of step S36 described below.

The berthing parameter calculation unit 16 performs clustering for the berthing place edge point cloud by using the grouping threshold Gth (step S36).

Next, the berthing parameter calculation unit 16 calculates the distance from the reference position RP to the center of gravity position of each cluster for the clusters obtained by the process of step S36 (step S37).

Next, the berthing parameter calculation unit 16 acquires a point cloud included in the cluster for which the distance from the reference position RP to the center of gravity position is shortest, based on the result of the process of step S37 (step S38).

Next, the berthing parameter calculation unit 16 generates the straight line using the point cloud acquired in step S38 (step S39), and determines whether or not the variance of the point cloud with respect to the straight line is equal to or smaller than the threshold (step S40).

When the variance is larger than the threshold value (step S40; No), the berthing parameter calculation unit 16 discards the straight line generated in step S39, acquires the berthing side straight line Ls from the memory 112 (step S41), and then continues the process after step S16. When the variance is equal to or smaller than the threshold value (step S40; Yes), the berthing parameter calculation unit 16 acquires the straight line generated in step S39 as the berthing side straight line Ls (step S42), stores the berthing side straight line Ls in the memory 12 (step S43), and then continues the process after step S16.

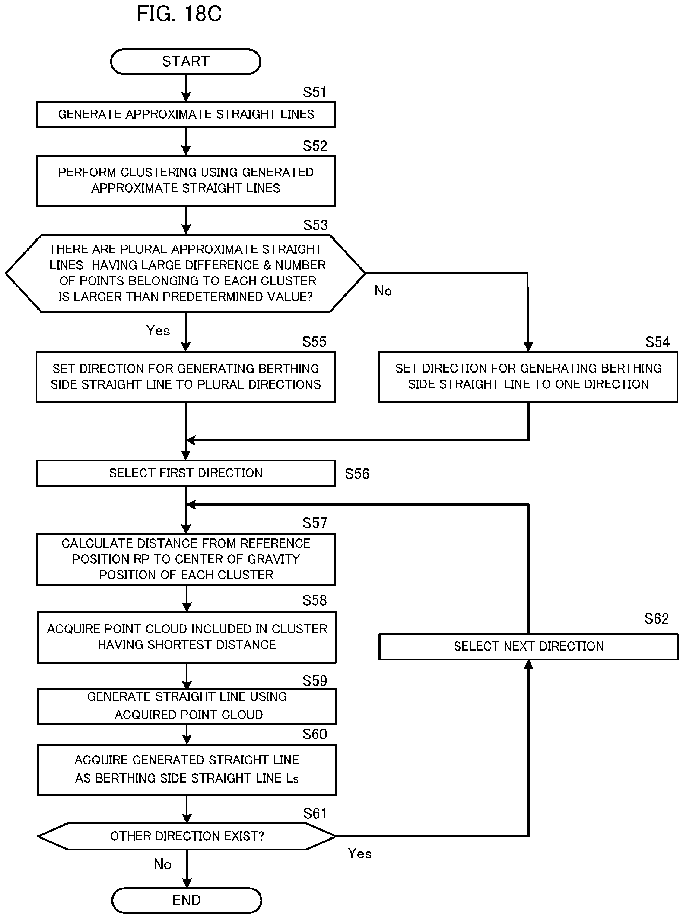

Next, a process according to the second generation method of generating the berthing side straight line performed in step S15 will be described with reference to FIG. 18C. FIG. 18C is a flowchart showing an example of processing according to the second generation process of the berthing side straight line.

The berthing parameter calculation unit 16 generates approximate straight lines approximately representing the edge portion of the berthing place by performing a straight line search by the Hough transform for the berthing place edge point cloud (step S51).

Next, the berthing parameter calculation unit 16 performs clustering using the approximate straight lines generated in step S51 (step S52). Specifically, the berthing parameter calculation unit 16 performs clustering by extracting the points whose distance to the approximate straight lines generated in step S51 is within a predetermined threshold Dt.

The berthing parameter calculation unit 16 determines whether or not the approximate straight lines generated in step S51 satisfies such a condition that there are a plurality of approximate straight lines having a large difference in the directional vectors and the number of the points (data) belonging to the clusters is equal to or larger than a predetermined value (step S53).

When the approximate straight lines generated in step S51 do not satisfy the above-described condition (step S53; No), the berthing parameter calculation unit 16 estimates that there is one quay surface at the berthing place. Then, the berthing parameter calculation unit 16 sets the direction related to the generation of the berthing side straight line to one direction corresponding to the one quay surface (step S54), and then performs a process of step S56 described below. When the approximate straight lines generated in step S51 satisfy the above-described condition (step S53; Yes), the berthing parameter calculation unit 16 estimates that there are a plurality of quay surfaces at the berthing place. Then, the berthing parameter calculation unit 16 sets the direction for generating the berthing side straight line in a plurality of directions corresponding to each of the plurality of quay surfaces (step S55), and then performs a process of step S56 described below.

After selecting the first direction for generating the berthing side straight line (step S56), the berthing parameter calculation unit 16 calculates the distance from the reference position RP to the center of gravity position of each cluster for the cluster of the first direction (step S57).

Next, the berthing parameter calculation unit 16 acquires a point cloud included in the cluster for which the distance from the reference position RP to the center of gravity position is shortest, based on the result of the process in step S57 (step S58).

Next, the berthing parameter calculation unit 16 generates a straight line using the point cloud acquired in step S58 (step S59), acquires the generated straight line as the berthing side straight line Ls (step S60), and determines whether or not there is any other direction for which the berthing side straight line has not been acquired (step S61).

When there is other direction for which the berthing side straight line Ls has not been acquired yet (step S61; Yes), the berthing parameter calculation unit 16 selects a next direction for generating the berthing side straight line (step S62) and continues the process of step S57. When there is no direction for which the berthing side straight line Ls has not been acquired yet (step S61; No), the berthing parameter calculation unit 16 continues to perform the process of the step S16.

The berthing parameter calculation unit 16 calculates the quay distance, the approach angle and the berthing speed, which are the berthing parameters, using the berthing side straight line Ls calculated in step S15 (step S16).

Then, the berthing parameter calculation unit 16 generates the reliability information on the basis of the identification result of the surface in the viewing filed and the detected surface in step S13 and the calculation result of the berthing parameters in step S16 (step S17). Thereafter, the information processing device 1 performs control of the ship based on the reliability information (step S18). Thus, the information processing device 1 can accurately perform the berthing control of the ship on the basis of the reliability accurately reflecting the berthing state.

Then, the information processing device 1 determines whether or not the target ship is berthed (docked) (step S19). In this case, the information processing device 1 determines whether or not the target ship is berthed, based on the output signal of the sensor group 2 or a user's input via the interface 11, for example. Then, the information processing device 1 terminates the process of the flowchart when it is determined that the target ship is berthed (step S19; Yes). On the other hand, the information processing device 1 returns to step S11 when the target ship has not berthed (step S19; No).

According to the processing described above, the acquisition means acquires measurement data that is a set of data representing a plurality of measured points of the berthing place measured by the measurement device provided on the ship. Further, according to the processing described above, the cluster generation means generates one or a plurality of clusters obtained by dividing the plurality of measured points by clustering. Further, according to the processing described above, the straight line generation means generates a straight line along the berthing place where the ship is berthed, based on the cluster having a shortest distance to the ship.

As described above, according to the present embodiment, it is possible to generate a berthing side straight line Ls using the measured points included in the cluster closest from the reference position RP, from among the one or more clusters obtained by performing clustering for the plurality of measured points included in the berthing place edge point cloud. Therefore, according to the present embodiment, for example, even when a cushioning material such as a fender is installed on the side surface of the berthing place, it is possible to suitably generate a straight line along the edge of the berthing place.

In the present embodiment described above, the program may be stored using various types of non-temporary computer readable media (non-transitory computer readable medium) and supplied to a controller that is a computer, etc. Non-transitory computer readable media include various types of entity storage media (tangible storage medium). Examples of non-transitory computer-readable media include magnetic storage media (e.g., flexible disks, magnetic tapes, hard disk drives), magneto-optical storage media (e.g., magneto-optical disks), CD-ROM(Read Only Memory), CD-R, CD-R/W, solid-state memories (e.g., mask ROM, PROM(Programmable ROM), EPROM(Erasable PROM) and flash ROM, RAM(Random Access Memory.

While the present invention has been described with reference to the embodiments, the present invention is not limited to the above embodiments. Various modifications that can be understood by a person skilled in the art within the scope of the present invention can be made to the configuration and details of the present invention. That is, the Present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

DESCRIPTION OF REFERENCE NUMBERS

**[0119]**

1 Information processing device
2 Sensor group
3 Lidar

**Claims**

1. An information processing device comprising:

   an acquisition means configured to acquire measurement data which is a set of data representing a plurality of measured points of a berthing place measured by a measurement device provided on a ship;
   a cluster generation means configured to generate one or more clusters obtained by dividing the plurality of measured points by clustering; and
   a straight line generation means configured to generate a straight line along the berthing place of the ship, based on the one or more clusters.

2. The information processing device according to claim 1, wherein the one cluster is a cluster having a shortest distance to the ship.

3. The information processing device according to claim 1, wherein the cluster generation means performs the clustering based on a resolution of the measurement device, and a mean distance between a reference position of the ship and the plurality of measured points.

4. The information processing device according to claim 1, wherein the cluster generation means performs the clustering based on a distance between one or more approximate straight lines approximately representing edge portions of the berthing place and the plurality of measured points.

5. The information processing device according to any one of claims 1 to 4, wherein the straight line generation means calculates each of a plurality of center of gravity positions for each of the plurality of clusters, and generates the straight line based on one cluster having a smallest distance between the center of gravity position and a reference position of the ship.

6. The information processing device according to claim 4, wherein, when a difference in direction vectors of the plurality of approximate straight lines is large and a number of data belonging to the plurality of clusters is equal to or larger than a predetermined value, the straight line generation means estimates that there are a plurality of quay surfaces at the berthing place and generates the straight lines in a plurality of directions corresponding to each of the plurality of quay surfaces.

7. The information processing device according to any one of claims 1 to 6, wherein the acquisition means acquires, as the measurement data, data obtained by applying at least one of

removal of water surface reflection data and/or reduction of a data point number by down-sampling to data generated by the measurement device,
the water surface reflection data being generated through reflection of light emitted by the measurement device at a water surface.

8. A control method executed by a computer, comprising:

acquiring measurement data which is a set of data representing a plurality of measured points of a berthing place measured by a measurement device provided on a ship;
generating one or more clusters obtained by dividing the plurality of measured points by clustering; and
generating a straight line along the berthing place of the ship, based on the one or more clusters.

9. A program causing a computer to execute processing of:

acquiring measurement data which is a set of data representing a plurality of measured points of a berthing place measured by a measurement device provided on a ship;
generating one or more clusters obtained by dividing the plurality of measured points by clustering; and
generating a straight line along the berthing place of the ship, based on the one or more clusters.

10. A storage medium which stores the program according to claim 9.

FIG. 1A

FIG. 1B

FIG. 1C

FIG. 2

FIG. 3

## FIG. 4A

QUAY

## FIG. 4B

VERTICAL LINES

NEAREST
NEIGHBOR POINTS

FIG. 5A

| UPPER SURFACE | | | | SIDE SURFACE | | | | STRAIGHT LINE | DISTANCE | | ANGLE |
|---|---|---|---|---|---|---|---|---|---|---|---|
| VIEWING ANGLE | DETECTION | NUMBER OF NORMALS | VARIANCE | VIEWING ANGLE | DETECTION | NUMBER OF NORMALS | VARIANCE | ABSOLUTE VALUE | AMOUNT OF CHANGE | CHANGE RATE | AMOUNT OF CHANGE |
| 0 or 1 | 0 or 1 | 0 or 1 | 0 or 1 | 0 or 1 | 0 or 1 | 0 or 1 | 0 or 1 | 0 or 1 | 0 or 1 | 0 or 1 | 0 or 1 |

FIG. 5B

| NUMBER OF TARGET POINTS | $c_3 = \dfrac{1}{76-10}x - \dfrac{10}{76-10}$ | |
|---|---|---|
| STANDARD DEVIATION OF TARGET POINTS | $c_2 = \dfrac{1}{0.1-0.2}x - \dfrac{0.2}{0.1-0.2}$ | |
| POINT CLOUD BOTH SIDES /ONE SIDE | $c_1 = \begin{cases} 0.0 \ (x=0) \\ 1.0 \ (x=1) \end{cases}$ | |
| INTERVAL BETWEEN TWO ENDS OF TARGET POINTS | $c_0 = \dfrac{1}{20.0-4.0}x - \dfrac{4.0}{20.0-4.0}$ | |
| CALCULATION RELIABILITY | $c = \dfrac{w_3 c_3 + w_2 c_2 + w_1 c_1 + w_0 c_0}{w_3 + w_2 + w_1 + w_0}$<br><br>$(w_3 = 8.0, w_2 = 4.0, w_1 = 2.0, w_0 = 1.0)$ | |
| TOTAL RELIABILITY | $r = \dfrac{w_{qs}(q_{s0} + q_{s1}) + w_{qu}(q_{u0} + q_{u1}) + w_c c}{2w_{qs} + 2w_{qu} + w_c}$<br><br>$\left( w_{qs} = 2.0, w_{qu} = 1.0, w_c = 1.0 \right)$ | |

# FIG. 5C

Ls

STANDARD
DEVIATION $c_2$

INTERVAL OF
BOTH ENDS $c_0$

BOTH SIDES
/ ONE SIDE $c_1$

NUMBER $c_3$

FIG. 6A

FIG. 6B

FIG. 7A

FIG. 7B

FIG. 7C

Lx

Lx

FIG. 7D

QUAY
DISTANCE

Lx

FIG. 7E

FIG. 8A

BERTHING PLACE

MEASURED POINTS
(BERTHING PLACE EDGE
POINT CLOUD)

RP     Dg     GP

RESOLUTION (ANGLE BETWEEN ADJACENT POINTS): $\theta r$

FIG. 8B

DISTANCE OF ADJACENT POINTS: $l$

$$l \cong \theta r \times Dg$$

DISTANCE Dg

FIG. 8C

EQUAL TO OR SMALLER THAN GROUPING THRESHOLD

LARGER THAN GROUPING THRESHOLD

GROUPING THRESHOLD

FIG. 8D

FIG. 9

CLUSTER C1

CLUSTER C2

## FIG. 10

## FIG. 11A

MEASURED POINTS
(POINT CLOUD DATA TDA)

Lc1
(=Ls)

FIG. 11B

QUAY DISTANCE

Ls

## FIG. 12A

EQUAL TO OR SMALLER THAN
GROUPING THRESHOLD

GROUPING
THRESHOLD

## FIG. 12B

CLUSTER

FIG. 12C

FIG. 12D

Lck

VARIANCE: LARGE

FIG. 12E

Ls

# FIG. 13

BERTHING PLACE

MEASURED POINTS
(BERTHING PLACE EDGE
POINT CLOUD)

La1

La2

FIG. 14

FIG. 15

Dh1

GQ1

CLUSTER E1

GQ2

CLUSTER E2

RP

Dh2

FIG. 16

MEASURED POINTS
(POINT CLOUD DATA TDB)

Ld1
(=Ls)

## FIG. 17A

## FIG. 17B

CLUSTER 1

CLUSTER 3

CLUSTER 2

CLUSTER 1

FIG. 17C

CLUSTER 3

$r_1$

CLUSTER 2

$r_3$

$r_2$

RP

SINCE $r_1$ IS MINIMUM, CLUSTER 1 IS ADOPTED

FIG. 17D

Ls

FIG. 17E

# FIG. 18A

START

S11
ACQUIRE POINT CLOUD DATA
IN DIRECTION OF BERTHING PLACE

S12
CALCULATE NORMAL VECTORS,
CALCULATE NUMBER & VARIANCE
OF NORMAL VECTORS

S13
IDENTIFY SURFACE WITHIN FIELD OF VIEW
& DETECTION SURFACE

S14
CALCULATE NEAREST NEIGHBOR POINTS
FOR EACH VERTICAL LINE

S15
GENERATE BERTHING SIDE STRAIGHT LINE

S16
CALCULATE BERTHING PARAMETERS
(QUAY DISTANCE, APPROACH ANGLE,
BERTHING SPEED, ETC.)

S17
GENERATE RELIABILITY INFORMATION

S18
CONTROL SHIP BASED ON RELIABILITY INFORMATION

S19
BERTHED ?
No
Yes

END

## FIG. 18B

START

ACQUIRE RELIABILITY INFORMATION
OF PREVIOUS TIME POINT — S31

RELIABILITY＞THRESHOLD? — S32

No → SET GROUPING THRESHOLD Gth
TO PREDETERMINED VALUE — S33

Yes

CALCULATE DISTANCE Dg
FROM REFERENCE POINT RP
TO CENTER OF GRAVITY POSITION GP — S34

CALCULATE GROUPING THRESHOLD Gth — S35

PERFORM CLUSTERING FOR BERTHING
PLACE EDGE POINT CLOUD USING
GROUPING THRESHOLD Gth — S36

CALCULATE DISTANCE FROM REFERENCE
POSITION RP TO CENTER OF GRAVITY
POSITION OF EACH CLUSTER — S37

ACQUIRE POINT CLOUD INCLUDED IN
CLUSTER HAVING SHORTEST DISTANCE — S38

GENERATE STRAIGHT LINE USING
ACQUIRED POINT CLOUD — S39

VARIANCE OF POINT CLOUD EQUAL
TO OR SMALLER THAN THRESHOLD? — S40

No → ACQUIRE BERTHING SIDE STRAIGHT LINE Ls
FROM MEMORY — S41

Yes

ACQUIRE GENERATED STRAIGHT LINE
AS BERTHING SIDE STRAIGHT LINE Ls — S42

STORE BERTHING SIDE STRAIGHT LINE
TO MEMORY — S43

END

## FIG. 18C

```
                    ┌─────────────┐
                    │    START    │
                    └──────┬──────┘
                           │                    S51
              ┌────────────▼──────────────────────┐
              │ GENERATE APPROXIMATE STRAIGHT LINES│
              └────────────┬──────────────────────┘
                           │                    S52
              ┌────────────▼──────────────────────┐
              │ PERFORM CLUSTERING USING GENERATED │
              │     APPROXIMATE STRAIGHT LINES     │
              └────────────┬──────────────────────┘
                           │                    S53
```

**S53** — THERE ARE PLURAL APPROXIMATE STRAIGHT LINES HAVING LARGE DIFFERENCE & NUMBER OF POINTS BELONGING TO EACH CLUSTER IS LARGER THAN PREDETERMINED VALUE?

No → **S54** SET DIRECTION FOR GENERATING BERTHING SIDE STRAIGHT LINE TO ONE DIRECTION

Yes → **S55** SET DIRECTION FOR GENERATING BERTHING SIDE STRAIGHT LINE TO PLURAL DIRECTIONS

**S56** SELECT FIRST DIRECTION

**S57** CALCULATE DISTANCE FROM REFERENCE POSITION RP TO CENTER OF GRAVITY POSITION OF EACH CLUSTER

**S58** ACQUIRE POINT CLOUD INCLUDED IN CLUSTER HAVING SHORTEST DISTANCE

**S59** GENERATE STRAIGHT LINE USING ACQUIRED POINT CLOUD

**S60** ACQUIRE GENERATED STRAIGHT LINE AS BERTHING SIDE STRAIGHT LINE Ls

**S61** OTHER DIRECTION EXIST?

Yes → **S62** SELECT NEXT DIRECTION

No → END

## INTERNATIONAL SEARCH REPORT

| | | International application No. |
|---|---|---|
| | | **PCT/JP2023/008840** |

### A. CLASSIFICATION OF SUBJECT MATTER

*G05D 1/00*(2006.01)i; *B63B 49/00*(2006.01)i; *B63B 79/40*(2020.01)i; *B63H 25/04*(2006.01)i; *G01S 17/93*(2020.01)i; *G05D 1/08*(2006.01)i
FI: G05D1/00 A; G01S17/93; B63H25/04 D; B63H25/04 G; B63B49/00 Z; B63B79/40; G05D1/08 Z

According to International Patent Classification (IPC) or to both national classification and IPC

### B. FIELDS SEARCHED

Minimum documentation searched (classification system followed by classification symbols)

G05D1/00; B63B49/00; B63B79/40; B63H25/04; G01S17/93; G05D1/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-59403 A (YANMAR CO LTD) 16 April 2020 (2020-04-16) paragraphs [0112]-[0124], fig. 7-8 | 1-5, 7-10 |
| A | | 6 |
| Y | JP 2014-211862 A (PANASONIC CORP) 13 November 2014 (2014-11-13) paragraphs [0013], [0016], [0031], [0051]-[0055] | 1-5, 7-10 |
| Y | JP 2020-190814 A (TOYOTA CENTRAL RES & DEV) 26 November 2020 (2020-11-26) paragraphs [0032]-[0034] | 1-5, 7-10 |
| Y | WO 2021/084583 A1 (MITSUBISHI ELECTRIC CORPORATION) 06 May 2021 (2021-05-06) paragraphs [0022]-[0023], fig. 3 | 7 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **18 April 2023** | **09 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

International application No.

**PCT/JP2023/008840**

| Patent document cited in search report | | | Publication date (day/month/year) | Patent family member(s) | Publication date (day/month/year) |
|---|---|---|---|---|---|
| JP | 2020-59403 | A | 16 April 2020 | US 2021/0347449 A1 paragraphs [0119]-[0131], fig. 7-8 EP 3865395 A1 | |
| JP | 2014-211862 | A | 13 November 2014 | US 2014/0297093 A1 paragraphs [0026], [0026], [0041], [0061]-[0065] | |
| JP | 2020-190814 | A | 26 November 2020 | (Family: none) | |
| WO | 2021/084583 | A1 | 06 May 2021 | (Family: none) | |

Form PCT/ISA/210 (patent family annex) (January 2015)

**REFERENCES CITED IN THE DESCRIPTION**

**Patent documents cited in the description**

- JP 2020059403 A

- WO 2019188745 A